(19) Europäisches Patentamt
European Patent Office
Office européen des brevets

(11) **EP 4 019 352 A1**

(12) **EUROPEAN PATENT APPLICATION**

(43) Date of publication:
**29.06.2022 Bulletin 2022/26**

(21) Application number: **21195705.5**

(22) Date of filing: **09.09.2021**

(51) International Patent Classification (IPC):
*B60W 30/085* (2012.01)  *B60W 30/095* (2012.01)
*B60W 30/18* (2012.01)  *B60W 60/00* (2020.01)
*B60W 30/09* (2012.01)  *B60W 50/14* (2020.01)

(52) Cooperative Patent Classification (CPC):
**B60W 30/0956; B60K 35/00; B60W 30/085;
B60W 30/09; B60W 30/0953; B60W 30/18054;
B60W 30/181; B60W 50/14; B60W 60/0016;
B60W 60/0017;** B60K 2370/167; B60K 2370/178;
B60K 2370/179; B60Q 1/46; B60W 2050/143;
(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 US 202017130023**

(71) Applicant: **INTEL Corporation
Santa Clara, CA 95054 (US)**

(72) Inventors:
• **BUERKLE, Cornelius
76137 Karlsruhe (DE)**
• **SCHOLL, Kay-Ulrich
76316 Malsch (DE)**
• **PASCH, Frederik
76137 Karlsruhe (DE)**
• **OBORIL, Fabian
75139 Karlsruhe (DE)**

(74) Representative: **Viering, Jentschura & Partner
mbB
Patent- und Rechtsanwälte
Am Brauhaus 8
01099 Dresden (DE)**

(54) **SAFETY SYSTEM FOR A VEHICLE**

(57)   A safety system for a vehicle may include a processor configured to determine whether a further vehicle is approaching the vehicle from a backside or a lateral side; determine that a collision of the further vehicle with the vehicle is likely; determine an evasive maneuver of the vehicle such that the evasive maneuver reduces the collision likelihood or impact between the vehicle and the further vehicle; and provide control instructions to control the vehicle to perform the evasive maneuver.

**FIG. 4D**

400

102

408 — further vehicle approaching? — No
Yes

460 — collision with further vehicle likely? — No
Yes

410 — evasive maneuver

412 — control instructions for evasive maneuver

**(Cont. next page)**

EP 4 019 352 A1

(52) Cooperative Patent Classification (CPC): (Cont.)
B60W 2050/146; B60W 2520/10;
B60W 2540/049; B60W 2552/05;
B60W 2554/402; B60W 2554/4023;
B60W 2554/4042; B60W 2554/801;
B60W 2554/802; B60W 2554/805

**Description**

Technical Field

Various aspects of this disclosure generally relate to a safety system for a vehicle.

Background

In various situations, such as in a traffic jam, at a red traffic light, stop-and-go traffic, or unfavourable visibility (e.g. direct sunlight, fog, etc.) etc., a vehicle may be stopped, may reduce its velocity to stop, may move with reduced velocity, or may become visible for other approaching vehicles with not enough time to reduce velocity or stop in time. This applies to any type of vehicle - user-operated, vehicle with driver-assistance systems or autonomous vehicle. In such a situation, a rear-end collision with other traffic participants may be critical. By way of example, at an end of a traffic jam, another vehicle may approach the vehicle with a significantly higher velocity and, in the case that a driver of the other vehicle does not notice the end of the traffic jam or notices it too late, this may lead to an accident with fatal consequences. Therefore, it may be necessary to provide a safety system for a vehicle that is capable to avoid or reduce an impact, and/or a severity of rear-end collisions. The safety system may be included in an ADAS (advanced driver-assistance system) or AD (autonomous driving) vehicle.

Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. 1 shows an exemplary vehicle in accordance with various aspects of the disclosure;
FIG. 2 shows various exemplary electronic components of a control system of the vehicle in accordance with various aspects of the disclosure;
FIG. 3 shows an exemplary network area with various communication devices in accordance with various aspects of the disclosure;
FIG. 4A to FIG. 4D each show a safety system for a vehicle in accordance with various aspects of the disclosure;
FIG. 5A to FIG. 5F each show the safety system using the control system, in accordance with various aspects of the disclosure;
FIG. 6A to FIG. 6C each show the safety system performing an exemplary risk analysis, in accordance with various aspects of the disclosure;
FIG. 7A to FIG. 7D each show an exemplary driving scenario in accordance with various aspects of the disclosure; and
FIG. 8 shows an exemplary method of operating a safety system for a vehicle in accordance with various aspects of the disclosure.

Description

The following detailed description refers to the accompanying drawings that show, by way of illustration, exemplary details and aspects in which the disclosure may be practiced.
The word "exemplary" is used herein to mean "serving as an example, instance, or illustration". Any aspect or design described herein as "exemplary" is not necessarily to be construed as preferred or advantageous over other aspects or designs.
Throughout the drawings, it should be noted that like reference numbers are used to depict the same or similar elements, features, and structures, unless otherwise noted.
The terms "at least one" and "one or more" may be understood to include a numerical quantity greater than or equal to one (e.g., one, two, three, four, [...], etc.). The term "a plurality" may be understood to include a numerical quantity greater than or equal to two (e.g., two, three, four, five, [...], etc.).
The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. The phrases "group (of)", "set (of)", "collection (of)", "series (of)", "sequence (of)", "grouping (of)", etc., and the like in the description and in the claims, if any, refer to a quantity equal to or greater than one, i.e., one or more. The phrases "proper subset", "reduced subset", and "lesser subset" refer to a subset of a set that is not equal to the set, illustratively, referring to a subset of a set that contains less elements than the set.

The phrase "at least one of' with regard to a group of elements may be used herein to mean at least one element from the group including the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The processor or controller may execute one or more specific functions and the data may be handled according to the one or more executed specific functions. Further, a processor or controller as used herein may be understood as any kind of circuit, e.g., any kind of analog or digital circuit, and may also be referred to as a "processing element", "processing elements", "processing circuit," "processing circuitry," among others. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), Artificial Intelligence (AI) processor, Artificial Intelligence (AI) accelerator module, etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality, among others, and conversely that any single processor, controller, or logic circuit detailed herein may be realized as two (or more) separate entities with equivalent functionality, among others.

The term "real-time" as used herein with respect to a processing (e.g., by a processor) may be understood as a time constraint to perform the processing. For example, a processor processing data in real-time may be understood as a time constraint (e.g., of less than a second, e.g., of less than a millisecond, e.g., of less than hundred microseconds, etc.) between receiving the data and providing an output for the data. For example, a vehicle processing data in real-time may be understood as a time constraint (e.g., of less than two seconds, e.g., of less than one second, e.g., of less than hundred milliseconds, etc.) between detecting data by one or more data ingestion devices and providing control instructions for controlling the vehicle (or performing the control of the vehicle). In some aspects, the time constraint between the detection of data by one or more data ingestion devices and a control of the vehicle based on the detected data may be referred to as reaction time of the vehicle.

As used herein, "memory" is understood as a computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. References to a "memory" included herein may also be understood as a non-transitory memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. For example, a processor or controller may transmit or receive data from other devices over a wireline link (in some aspects referred to as wired connection or as wireline connection), such as an Ethernet link, a MIPI (Mobile Industry Processor Interface Alliance) link, a Peripheral Component Interconnect Express (PCIe) link, etc.

The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "vehicle" may be understood to include any type of driven or drivable object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, a rocket, among others.

A "vehicle" may be, for example, a ground vehicle, an aerial vehicle, or an aquatic vehicle. A "ground vehicle" may be understood to include any type of vehicle, as described above, which is configured to traverse or be driven on the ground, e.g., on a street, on a road, on a track, on one or more rails, off-road, etc. An "aerial vehicle" may be understood to be any type of vehicle, as described above, which is capable of being maneuvered above the ground for any duration of time, e.g., a drone. Similar to a ground vehicle having wheels, belts, etc., for providing mobility on terrain, an "aerial vehicle" may have one or more propellers, wings, fans, among others, for providing the ability to maneuver in the air. An "aquatic vehicle" may be understood to be any type of vehicle, as described above, which is capable of being maneuvers on or below the surface of liquid, e.g., a boat on the surface of water or a submarine below the surface. It is appreciated that some vehicles may be configured to operate as one of more of a ground, an aerial, and/or an aquatic vehicle.

The term "autonomous vehicle" may describe a vehicle capable of implementing at least one navigational change without driver input. A navigational change may describe or include a change in one or more of steering, braking, or acceleration/deceleration of the vehicle. A vehicle may be described as autonomous even in case the vehicle is not fully automatic (e.g., fully operational with driver input or without driver input). Autonomous vehicles may include those vehicles that can operate under driver control during certain time periods and without driver control during other time periods. Autonomous vehicles may also include vehicles that control only some aspects of vehicle navigation, such as steering (e.g., to maintain a vehicle course between vehicle lane constraints) or some steering operations under certain circumstances (but not under all circumstances), but may leave other aspects of vehicle navigation to the driver (e.g., braking or braking under certain circumstances). Autonomous vehicles may also include vehicles that share the control of one or more aspects of vehicle navigation under certain circumstances (e.g., hands-on, such as responsive to a driver input) and vehicles that control one or more aspects of vehicle navigation under certain circumstances (e.g., hands-off, such as independent of driver input). Autonomous vehicles may also include vehicles that control one or more aspects of vehicle navigation under certain circumstances, such as under certain environmental conditions (e.g., spatial areas, roadway conditions). In some aspects, autonomous vehicles may handle some or all aspects of braking, speed control, velocity control, and/or steering of the vehicle. An autonomous vehicle may include those vehicles that can operate without a driver. The level of autonomy of a vehicle may be described or determined by the Society of Automotive Engineers (SAE) level of the vehicle (e.g., as defined by the SAE, for example in SAE J3016 2018: Taxonomy and definitions for terms related to driving automation systems for on road motor vehicles) or by other relevant professional organizations. The SAE level may have a value ranging from a minimum level, e.g. level 0 (illustratively, substantially no driving automation), to a maximum level, e.g. level 5 (illustratively, full driving automation).

In the context of the present disclosure, "vehicle operation data" may be understood to describe any type of feature related to the operation of a vehicle. By way of example, "vehicle operation data" may describe the status of the vehicle, such as the type of propulsion unit(s), types of tires or propellers of the vehicle, the type of vehicle, and/or the age of the manufacturing of the vehicle. More generally, "vehicle operation data" may describe or include static features or static vehicle operation data (illustratively, features or data not changing over time). As another example, additionally or alternatively, "vehicle operation data" may describe or include features changing during the operation of the vehicle, for example, environmental conditions, such as weather conditions or road conditions during the operation of the vehicle, fuel levels, fluid levels, operational parameters of the driving source of the vehicle, etc. More generally, "vehicle operation data" may describe or include varying features or varying vehicle operation data (illustratively, time-varying features or data).

Various aspects herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A computing system may execute a machine learning model to progressively improve performance of a specific task. In some aspects, parameters of a machine learning model may be adjusted during a training phase based on training data. Various aspects may use a trained machine learning model during an inference phase to make predictions or decisions based on input data. Various aspects may use the trained machine learning model to generate additional training data. Various aspects may adjust an additional machine learning model during a second training phase based on the generated additional training data. Various aspects may use a trained additional machine learning model during an inference phase to make predictions or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to predict the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. Various aspects may use the unsupervised model to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as image data, radar data, LIDAR data, among others. A classification model as described herein may, for example, classify certain driving conditions and/or environmental conditions, such as weather conditions, road conditions, among others. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, among others. The neural network may include any number of layers. The training of the neural network (e.g., adapting the layers of the neural network) may use or may be based on any kind of training principle, such as backpropagation (e.g., using the backpropagation algorithm).

Throughout the disclosure, the following terms may be used as synonyms: data, sensor data, sensor information, detected information, measured information, parameter. These terms may correspond to groups of values a sensor generates and used to implement one or more models for directing a vehicle to operate according to the manners described herein.

Furthermore, throughout the disclosure, the following terms may be used as synonyms: data ingestion device, data ingestion unit, data acquisition device, data acquisition unit and may correspond to an entity (e.g., device, e.g., unit) configured to obtain (e.g., to ingest, to acquire, to sense, and/or to detect) data.

In situations where a vehicle is at an end of a queue of traffic participants, such as at the end of a traffic jam, a red traffic light, or stop-and-go traffic, a rear-end collision with other traffic participants may lead to an accident with fatal consequences (even up to death of a driver or passengers of the vehicle). Various aspects of this disclosure provide a safety system for a vehicle that is capable to reduce a number, an impact, and/or a severity of rear-end collisions. According to various aspects of the disclosure, a safety system for a vehicle is provided, which is capable to reduce a number and/or in impact of rear-end collisions. Further, the safety system is capable to reduce an accident severity considering a driver and/or passengers of the vehicle. For example, the safety system may, in at least one aspect, detect an approaching vehicle and may perform an evasive maneuver to reduce a collision risk between the vehicle and approaching vehicle.

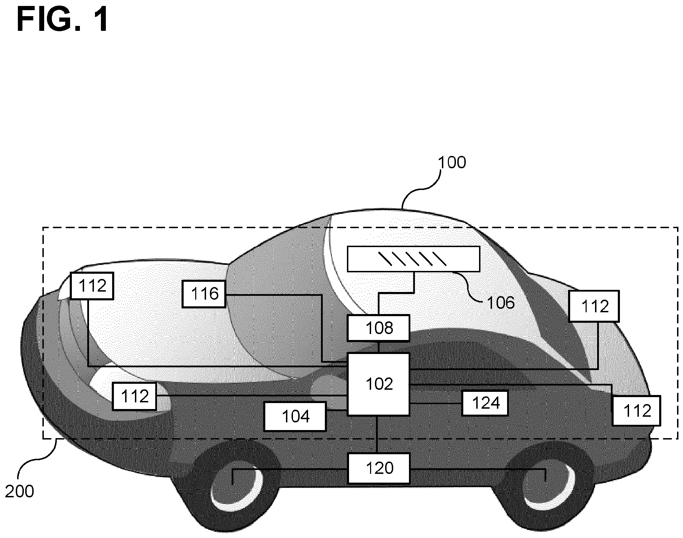

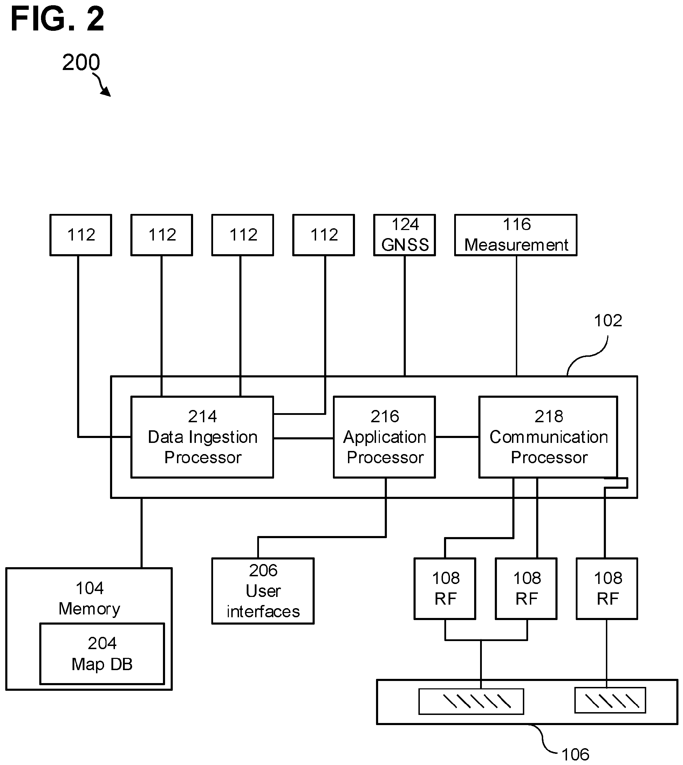

**FIG. 1** shows a vehicle 100 including a mobility system 120 and a control system 200 (see also FIG. 2) in accordance with various aspects of the disclosure. It is appreciated that vehicle 100 and control system 200 are exemplary in nature and may thus be simplified for explanatory purposes. For example, while vehicle 100 is depicted as a ground vehicle, aspects of this disclosure may be equally or analogously applied to aerial vehicles (such as drones) or aquatic vehicles (such as boats). Furthermore, the quantities and locations of elements, as well as relational distances (as discussed above, the figures are not to scale) are provided as examples and are not limited thereto. The components of vehicle 100 may be arranged around a vehicular housing of vehicle 100, mounted on or outside of the vehicular housing, enclosed within the vehicular housing, or any other arrangement relative to the vehicular housing where the components move with vehicle 100 as it travels. The vehicular housing, such as, an automobile body, drone body, plane or helicopter fuselage, boat hull, or similar type of vehicular body is dependent on the type of vehicle implemented as vehicle 100.

In addition to including a control system 200, vehicle 100 may also include the mobility system 120. Mobility system 120 may include components of vehicle 100 related to steering and movement of vehicle 100. In some aspects, where vehicle 100 is an automobile, for example, mobility system 120 may include wheels and axles, a suspension, an engine, a transmission, brakes, a steering wheel, associated electrical circuitry and wiring, and any other components used in the driving of an automobile. In some aspects, where vehicle 100 is an aerial vehicle, mobility system 120 may include one or more of rotors, propellers, jet engines, wings, rudders or wing flaps, air brakes, a yoke or cyclic, associated electrical circuitry and wiring, and any other components used in the flying of an aerial vehicle. In some aspects, where vehicle 100 is an aquatic or sub-aquatic vehicle, mobility system 120 may include any one or more of rudders, engines, propellers, a steering wheel, associated electrical circuitry and wiring, and any other components used in the steering or movement of an aquatic vehicle. In some aspects, mobility system 120 may also include autonomous driving functionality, and accordingly may include an interface with one or more processors 102 (e.g., a processing circuitry) configured to perform autonomous driving computations and decisions and an array of sensors for movement and obstacle sensing. In this sense, the mobility system 120 may be provided with instructions to direct the navigation and/or mobility of vehicle 100 from one or more components of the control system 200 (in some aspects referred to as autonomous vehicle platform). The autonomous driving components of mobility system 120 may also interface with one or more radio frequency (RF) transceivers 108 to facilitate mobility coordination with other nearby vehicular communication devices and/or central networking components that perform decisions and/or computations related to autonomous driving.

The control system 200 may include various components depending on the particular implementation. As shown in FIG. 1 and FIG. 2, the control system 200 may include one or more processors 102, one or more memories 104, an antenna system 106 which may include one or more antenna arrays at different locations on the vehicle for radio frequency (RF) coverage, one or more radio frequency (RF) transceivers 108, one or more data ingestion devices 112 (in some aspects referred to as data acquisition devices), one or more position devices 124 which may include components and circuitry for receiving and determining a position based on a Global Navigation Satellite System (GNSS) and/or a Global Positioning System (GPS), and one or more measurement devices 116, e.g. speedometer, altimeter, gyroscope, velocity sensors, etc.

The control system 200 may be configured to control the vehicle's 100 mobility via mobility system 120 and/or interactions with its environment, e.g. communications with other devices or network infrastructure elements (NIEs) such as base stations, via data ingestion devices 112 and the radio frequency communication arrangement including the one or more RF transceivers 108 and antenna system 106.

The one or more processors 102 may include a data ingestion processor 214, an application processor 216, a communication processor 218, and/or any other suitable processing device. Each processor 214, 216, 218 of the one or more processors 102 may include various types of hardware-based processing devices. By way of example, each processor 214, 216, 218 may include a microprocessor, pre-processors (such as an image pre-processor), graphics processors, a central processing unit (CPU), support circuits, digital signal processors, integrated circuits, memory, or any other types of devices suitable for running applications and for image processing and analysis. In some aspects, each processor 214, 216, 218 may include any type of single or multi-core processor, mobile device microcontroller, central processing unit, etc. These processor types may each include multiple processing units with local memory and instruction sets. Such processors may include video inputs for receiving image data from multiple image sensors and may also include video out capabilities.

Any of the processors 214, 216, 218 disclosed herein may be configured to perform certain functions in accordance with program instructions which may be stored in a memory of the one or more memories 104. In other words, a memory of the one or more memories 104 may store software that, when executed by a processor (e.g., by the one or more processors 102), controls the operation of the system, e.g., a driving and/or safety system. A memory of the one or more memories 104 may store one or more databases and image processing software, as well as a trained system, such as a neural network, or a deep neural network, for example. The one or more memories 104 may include any number of random-access memories, read only memories, flash memories, disk drives, optical storage, tape storage, removable storage and other types of storage. Alternatively, each of processors 214, 216, 218 may include an internal memory for such storage.

The data ingestion processor 214 may include processing circuity, such as a CPU, for processing data (e.g., the data ingestion devices 112 may acquire the data). For example, if one or more data ingestion devices are implemented as image acquisition units, e.g. one or more cameras, then the data ingestion processor may include image processors for processing image data using the information obtained from the image acquisition units as an input. The data ingestion processor 214 may, therefore, be configured to create voxel maps detailing the surrounding of the vehicle 100 based on the data input from the data ingestion devices 112 (e.g., cameras). According to various aspects, the data ingestion processor 214 may include one or more artificial intelligence (AI) accelerator modules.

An AI accelerator module, as used herein, may be a module configured to perform one or more machine learning tasks, such as employing neural networks. An AI accelerator module may refer to a specialized hardware accelerator or computer system designed to accelerate artificial intelligence (AI) applications, such as artificial neural networks, recurrent neural network, machine vision, and/or machine learning. An AI accelerator module may employ algorithms for robotics, internet of things, and/or other data-intensive or sensor-driven tasks. An AI accelerator module may refer to a system on module. An AI accelerator module may be configured to provide a hardware acceleration for neural networks (e.g., deep neural networks). An AI accelerator module may include one or more interfaces and a plurality of AI chips. An AI accelerator module may include a system on chip (SOC) including the plurality of AI chips. The AI accelerator module may be a multi-core accelerator and each of the plurality of AI chips may refer to a core of the multi-core accelerator. According to various aspects, an AI accelerator module may include further parts or components, such as one or more of a fan for cooling, a monitoring sensor, a control sensor, a housing, etc.

Application processor 216 may be a CPU, and may be configured to handle the layers above the protocol stack, including the transport and application layers. Application processor 216 may be configured to execute various applications and/or programs of vehicle 100 at an application layer of vehicle 100, such as an operating system (OS), a user interfaces (UI) 206 for supporting user interaction with vehicle 100, and/or various user applications. Application processor 216 may interface with communication processor 218 and act as a source (in the transmit path) and a sink (in the receive path) for data (e.g., user data), such as voice data, audio/video/image data, messaging data, application data, basic Internet/web access data, etc. In the transmit path, communication processor 218 may therefore receive and process outgoing data (e.g., the application processor 216 may provide the data) according to the layer-specific functions of the protocol stack, and provide the resulting data to digital signal processor 208. Communication processor 218 may then perform physical layer processing on the received data to produce digital baseband samples, which digital signal processor may provide to RF transceiver(s) 108. RF transceiver(s) 108 may then process the digital baseband samples to convert the digital baseband samples to analog RF signals, which RF transceiver(s) 108 may wirelessly transmit via antenna system 106. In the receive path, RF transceiver(s) 108 may receive analog RF signals from antenna system 106 and process the analog RF signals to obtain digital baseband samples. RF transceiver(s) 108 may provide the digital baseband samples to communication processor 218, which may perform physical layer processing on the digital baseband samples. Communication processor 218 may then provide the resulting data to other processors of the one or more processors 102, which may process the resulting data according to the layer-specific functions of the protocol stack and provide the resulting incoming data to application processor 216. Application processor 216 may then handle the incoming data at the application layer, which can include execution of one or more application programs with the data and/or presentation of the data to a user via one or more user interfaces 206. User interfaces 206 may include one or more screens, microphones, mice, touchpads, keyboards, or any other interface providing a mechanism for user input.

The communication processor 218 may include a digital signal processor and/or a controller which may direct such communication functionality of vehicle 100 according to the communication protocols associated with one or more radio access networks, and may execute control over antenna system 106 and RF transceiver(s) 108 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness, the configuration of vehicle 100 shown in FIG. 1 and FIG. 2 may depict only a single instance of such components.

Vehicle 100 may transmit and receive wireless signals with antenna system 106, which may be a single antenna or an antenna array that includes multiple antenna elements. In some aspects, antenna system 202 may additionally include analog antenna combination and/or beamforming circuitry. In the receive (RX) path, RF transceiver(s) 108 may receive analog radio frequency signals from antenna system 106 and perform analog and digital RF front-end processing on the analog radio frequency signals to produce digital baseband samples (e.g., In-Phase/Quadrature (IQ) samples) to provide to communication processor 218. RF transceiver(s) 108 may include analog and digital reception components including amplifiers (e.g., Low Noise Amplifiers (LNAs)), filters, RF demodulators (e.g., RF IQ demodulators)), and analog-to-digital converters (ADCs), which RF transceiver(s) 108 may utilize to convert the received radio frequency signals to digital baseband samples. In the transmit (TX) path, RF transceiver(s) 108 may receive digital baseband samples from communication processor 218 and perform analog and digital RF front-end processing on the digital baseband samples to produce analog radio frequency signals to provide to antenna system 106 for wireless transmission. RF transceiver(s) 108 may thus include analog and digital transmission components including amplifiers (e.g., Power Amplifiers (PAs), filters, RF modulators (e.g., RF IQ modulators), and digital-to-analog converters (DACs), which RF transceiver(s) 108 may utilize to mix the digital baseband samples received from communication processor 218 and produce the analog radio frequency signals for wireless transmission by antenna system 106. In some aspects, communication processor 218 may control the radio transmission and reception of RF transceiver(s) 108, including specifying the transmit and receive radio frequencies for operation of RF transceiver(s) 108.

According to some aspects, communication processor 218 includes a baseband modem configured to perform physical layer (PHY, Layer 1) transmission and reception processing to, in the transmit path, prepare outgoing transmit data (e.g., the communication processor 218 may provide the transmit data) for transmission via RF transceiver(s) 108, and, in the receive path, prepare incoming received data (e.g., the RF transceiver(s) 108 may provide the received data) for processing by communication processor 218. The baseband modem may include a digital signal processor and/or a controller. The digital signal processor may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. The digital signal processor may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, the digital signal processor may include one or more processors configured to retrieve and execute program code that defines control and processing logic for physical layer processing operations. In some aspects, the digital signal processor may execute processing functions with software via the execution of executable instructions. In some aspects, the digital signal processor may include one or more dedicated hardware circuits (e.g., ASICs, FPGAs, and other hardware) that are digitally configured to specific execute processing functions, where the one or more processors of digital signal processor may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of the digital signal processor may be realized as a coupled integrated circuit.

Vehicle 100 may be configured to operate according to one or more radio communication technologies. The digital signal processor of the communication processor 218 may be responsible for lower-layer processing functions (e.g., Layer 1/PHY) of the radio communication technologies, while a controller of the communication processor 218 may be responsible for upper-layer protocol stack functions (e.g., Data Link Layer/Layer 2 and/or Network Layer/Layer 3). The controller may thus be responsible for controlling the radio communication components of vehicle 100 (antenna system 106, RF transceiver(s) 108, position device 124, etc.) in accordance with the communication protocols of each supported radio communication technology, and accordingly may represent the Access Stratum and Non-Access Stratum (NAS) (also encompassing Layer 2 and Layer 3) of each supported radio communication technology. The controller may be structurally embodied as a protocol processor configured to execute protocol stack software (retrieved from a controller memory) and subsequently control the radio communication components of vehicle 100 to transmit and receive communication signals in accordance with the corresponding protocol stack control logic defined in the protocol stack software. The controller may include one or more processors configured to retrieve and execute program code that defines the upper-layer protocol stack logic for one or more radio communication technologies, which can include Data Link Layer/Layer 2 and Network Layer/Layer 3 functions. The controller may be configured to perform both user-plane and control-plane functions to facilitate the transfer of application layer data to and from vehicle 100 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by the controller of communication processor 218 may include executable instructions that define the logic of such functions.

In some aspects, vehicle 100 may be configured to transmit and receive data according to multiple radio communication technologies. Accordingly, in some aspects one or more of antenna system 106, RF transceiver(s) 108, and communication processor 218 may include separate components or instances dedicated to different radio communication technologies and/or unified components that are shared between different radio communication technologies. For example, in some aspects, multiple controllers of communication processor 218 may be configured to execute multiple protocol stacks, each dedicated to a different radio communication technology and either at the same processor or different processors. In some aspects, multiple digital signal processors of communication processor 218 may include separate processors and/or hardware accelerators that are dedicated to different respective radio communication technologies, and/or one or more processors and/or hardware accelerators that are shared between multiple radio communication technologies. In some aspects, RF transceiver(s) 108 may include separate RF circuitry sections dedicated to different respective radio communication technologies, and/or RF circuitry sections shared between multiple radio communication technologies. In some aspects, antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Communication processor 218 may be configured to implement one or more vehicle-to-everything (V2X) communication protocols, which may include vehicle-to-vehicle (V2V), vehicle-to-infrastructure (V2I), vehicle-to-network (V2N), vehicle-to-pedestrian (V2P), vehicle-to-device (V2D), vehicle-to-grid (V2G), and other protocols. Communication processor 218 may be configured to transmit communications including communications (one-way or two-way) between the vehicle 100 and one or more other (target) vehicles in an environment of the vehicle 100 (e.g., to facilitate coordination of navigation of the vehicle 100 in view of or together with other (target) vehicles in the environment of the vehicle 100), or even a broadcast transmission to unspecified recipients in a vicinity of the transmitting vehicle 100.

Communication processor 218 may be configured to operate via a first RF transceiver of the one or more RF transceivers(s) 108 according to different desired radio communication protocols or standards. By way of example, communication processor 218 may be configured in accordance with a Short-Range mobile radio communication standard, such as Bluetooth, Zigbee, among others, and the first RF transceiver may correspond to the corresponding Short-Range mobile radio communication standard. As another example, communication processor 218 may be configured to operate via a second RF transceiver of the one or more RF transceivers(s) 108 in accordance with a Medium or Wide Range mobile radio communication standard such as a 3G (e.g. Universal Mobile Telecommunications System - UMTS), a 4G (e.g. Long Term Evolution - LTE), a 5G mobile radio communication standard in accordance with corresponding 3GPP (3rd Generation Partnership Project) standards, among others. As a further example, communication processor 218 may be configured to operate via a third RF transceiver of the one or more RF transceivers(s) 108 in accordance with a Wireless Local Area Network communication protocol or standard, such as in accordance with IEEE 802.11 (e.g. 802.11, 802.11a, 802.11b, 802.11g, 802.11n, 802.11p, 802.11-12, 802.11ac, 802.11ad, 802.11ah, among others). The one or more RF transceiver(s) 108 may be configured to transmit signals via antenna system 106 over an air interface. The RF transceivers 108 may each have a corresponding antenna element of antenna system 106, or may share an antenna element of the antenna system 106.

Memory 104 may embody a memory component of vehicle 100, such as a hard drive or another such permanent memory device. Although not explicitly depicted in FIGs. 1 and 2, the various other components of vehicle 100, e.g. one or more processors 102, shown in FIGs. 1 and 2 may additionally each include integrated permanent and non-permanent memory components, such as for storing software program code, buffering data, etc.

The antenna system 106 may include a single antenna or multiple antennas. In some aspects, each of the one or more antennas of antenna system 106 may be placed at a plurality of locations on the vehicle 100 in order to increase RF coverage. The antennas may include a phased antenna array, a switch-beam antenna array with multiple antenna elements, etc. Antenna system 106 may be configured to operate according to analog and/or digital beamforming schemes in order to signal gains and/or provide levels of information privacy. Antenna system 106 may include separate antennas dedicated to different respective radio communication technologies, and/or antennas shared between multiple radio communication technologies. While shown as a single element in FIG. 1, antenna system 106 may include a plurality of antenna elements (e.g., antenna arrays) positioned at different locations on vehicle 100. The placement of the plurality of antenna elements may be strategically chosen in order to ensure a desired degree of RF coverage. For example, additional antennas may be placed at the front, back, corner(s), and/or on the side(s) of the vehicle 100.

Data ingestion devices 112 may include any number of data ingestion devices and components depending on the requirements of a particular application. This may include: image acquisition devices, proximity detectors, acoustic sensors, infrared sensors, piezoelectric sensors, etc., for providing data about the vehicle's environment. Image acquisition devices may include cameras (e.g., standard cameras, digital cameras, video cameras, single-lens reflex cameras, infrared cameras, stereo cameras, etc.), charge coupling devices (CCDs) or any type of image sensor. Proximity detectors may include radar sensors, light detection and ranging (LIDAR) sensors, mmWave radar sensors, etc. Acoustic sensors may include: microphones, sonar sensors, ultrasonic sensors, etc. Accordingly, each of the data ingestion devices may be configured to observe a particular type of data of the vehicle's 100 environment and forward the data to the data ingestion processor 214 in order to provide the vehicle with an accurate portrayal of the vehicle's environment. The data ingestion devices 112 may be configured to implement pre-processed sensor data, such as radar target lists or LIDAR target lists, in conjunction with acquired data.

Measurement devices 116 may include other devices for measuring vehicle-state parameters, such as a velocity sensor (e.g., a speedometer) for measuring a velocity of the vehicle 100, one or more accelerometers (either single axis or multi-axis) for measuring accelerations of the vehicle 100 along one or more axes, a gyroscope for measuring orientation and/or angular velocity, odometers, altimeters, thermometers, a humidity sensor (e.g., a hygrometer) for measuring a humidity, a distance meter to measure a roughness of a ground, a pressure sensor for measuring a pressure in the surround of the vehicle 100, a torque sensor for measuring a torque of the vehicle 100, a steering angle sensor for measuring a steering angle or a turning angle of the vehicle 100, etc. For example, the measurement devices 116 may include an inertial measurement unit. It is appreciated that vehicle 100 may have different measurement devices 116 depending on the vehicle type, e.g., car vs. drone vs. boat.

The measurement devices 116 may also include sensors (e.g., a stress sensor) configured to determine whether a passenger/driver sits on a seat in the vehicle or whether the seat is empty (e.g., by determining a weight of the seat, e.g., using infrared sensors, etc.).

Position devices 124 may include components for determining a position of the vehicle 100. For example, this may include global position system (GPS) or other global navigation satellite system (GNSS) circuitry configured to receive signals from a satellite system and determine a position of the vehicle 100. Position devices 124, accordingly, may provide vehicle 100 with satellite navigation features.

The one or more memories 104 may store data, e.g., in a database or in any different format, that may correspond to a map. For example, the map may indicate a location of known landmarks, roads, paths, network infrastructure elements, or other elements of the vehicle's 100 environment. The one or more processors 102 may process sensory information (such as images, radar signals, depth information from LIDAR, stereo processing of two or more images, etc.) of the environment of the vehicle 100 together with position information (such as a GPS coordinate, a vehicle's ego-motion, etc.) to determine a current location of the vehicle 100 relative to the known landmarks, and refine the determination of the vehicle's location. Certain aspects of this technology may be included in a localization technology such as a mapping and routing model.

The map database (DB) 204 may include any type of database storing (digital) map data for the vehicle 100, e.g., for the control system 200. The map database 204 may include data relating to the position, in a reference coordinate system, of various items, including roads, water features, geographic features, businesses, points of interest, restaurants, gas stations, etc. The map database 204 may store not only the locations of such items, but also descriptors relating to those items, including, for example, names associated with any of the stored features. In some aspects, a processor of the one or more processors 102 may download information from the map database 204 over a wired or wireless data connection to a communication network (e.g., over a cellular network and/or the Internet, etc.). In some cases, the map database 204 may store a sparse data model including polynomial representations of certain road features (e.g., lane markings) or target trajectories for the vehicle 100. The map database 204 may also include stored representations of various recognized landmarks that may be provided to determine or update a known position of the vehicle 100 with respect to a target trajectory. The landmark representations may include data fields, such as landmark type, landmark location, among other potential identifiers.

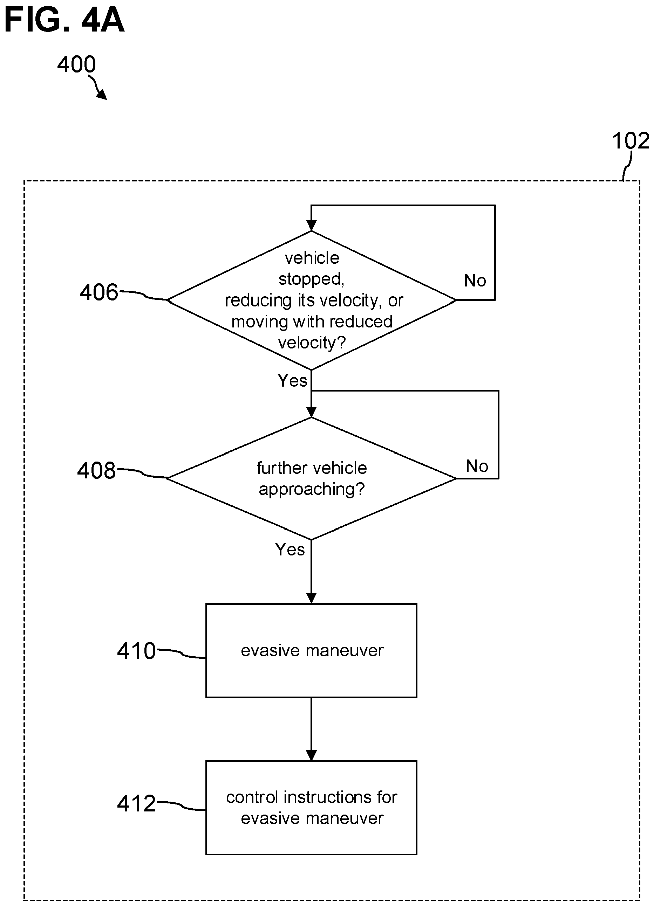

Furthermore, the control system 200 may include a driving model, e.g., implemented in an advanced driving assistance system (ADAS) and/or a driving assistance and automated driving system. By way of example, the control system 200 may include (e.g., as part of the driving model) a computer implementation of a formal model, such as a safety driving model. The control system 200 may include a safety system (e.g., the safety system 400 as described with reference to FIG. 4A to FIG. 6C). The safety system may include (e.g., as part of the driving model) a computer implementation of a safety driving model. A safety driving model may be or include a mathematical model formalizing an interpretation of applicable laws, standards, policies, etc. that are applicable to self-driving vehicles. A safety driving model may be designed to achieve, e.g., three goals: first, the interpretation of the law should be sound in the sense that it complies with how humans interpret the law; second, the interpretation should lead to a useful driving policy, meaning it will lead to an agile driving policy rather than an overly-defensive driving which inevitably would confuse other human drivers and will block traffic and in turn limit the scalability of system deployment; and third, the interpretation should be efficiently verifiable in the sense that it can be rigorously proven that the self-driving (autonomous) vehicle correctly implements the interpretation of the law. A safety driving model, illustratively, may be or include a mathematical model for safety assurance that enables identification and performance of proper responses to dangerous situations such that self-perpetrated accidents can be avoided.

As described above, the vehicle 100 may include the control system 200 as also described with reference to FIG. 2. The vehicle 100 may include the one or more processors 102 integrated with or separate from an engine control unit (ECU) which may be included in the mobility system 120 of the vehicle 100. The control system 200 may, in general, generate data to control or assist to control the ECU and/or other components of the vehicle 100 to directly or indirectly control the movement of the vehicle 100 via mobility system 120. The one or more processors 102 of the vehicle 100 may be configured to implement the aspects and methods described herein.

The components illustrated in FIGs. 1 and 2 may be operatively connected to one another via any appropriate interfaces. Furthermore, it is appreciated that not all the connections between the components are explicitly shown, and other interfaces between components may be covered within the scope of this disclosure.

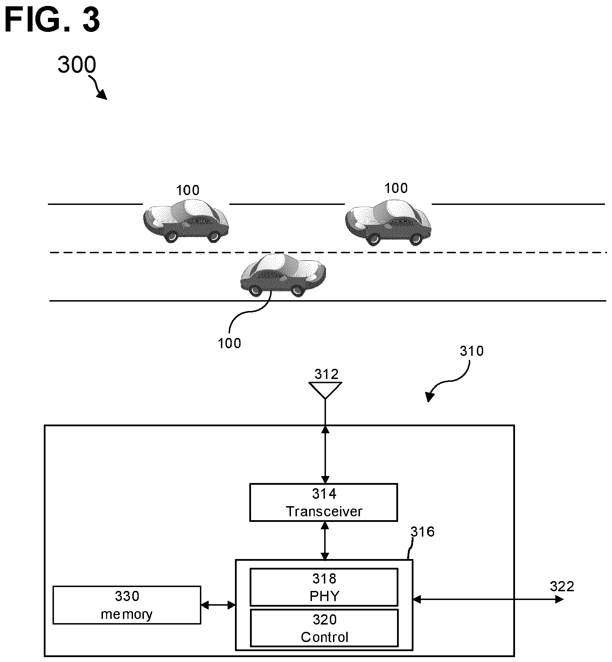

FIG. 3 shows an exemplary network area 300 according to various aspects of the disclosure. Network area 300 may include a plurality of vehicles 100, which may include, for example, drones and ground vehicles. Any one of these vehicles may communicate with one or more other vehicles 100 and/or with network infrastructure element (NIE) 310. NIE 310 may be (for example, a base station (e.g. an eNodeB, a gNodeB, etc.), a road side unit (RSU), a road sign, etc.) configured to wirelessly communicate with vehicles and/or a mobile radio communication network, etc., and serve as an interface between one or more of vehicles 100 and a mobile radio communications network (e.g., an LTE network or a 5G network).

NIE 310 may include, among other components, at least one of an antenna system 312, a RF transceiver 314, and a baseband circuit 316 with appropriate interfaces between each of them. In an abridged overview of the operation of NIE 310, NIE 310 may transmit and receive wireless signals via antenna system 312, which may be an antenna array including multiple antenna arrays. Antenna system 312 may include multiple antenna elements (e.g., multiple antenna arrays) in order to employ multiple-input and multiple-output (MIMO) methods and schemes.

RF transceiver 314 may perform transmit and receive RF processing to convert outgoing baseband samples from baseband circuit 316 into analog radio signals to provide to antenna system 312 for radio transmission and to convert incoming analog radio signals received from antenna system 312 into baseband samples to provide to baseband circuit 316. Accordingly, RF transceiver 314 may be configured to operate similarly to the RF transceiver(s) described in FIGs. 1 and 2, albeit perhaps on a much larger scale (e.g., amplifiers to transmit higher power signals, etc.).

Baseband circuit 316 may include a controller 310 and a physical layer processor 318 which may be configured to perform transmit and receive PHY processing on baseband samples received from RF transceiver 314 to provide to a controller 320 and on baseband samples received from controller 320 to provide to RF transceiver 314. In some aspects, the baseband modem 316 may be located external to the NIE 310, e.g., at a centralized location of a mobile radio communication network. Controller 320 may control the communication functionality of NIE 310 according to the corresponding radio communication technology protocols, which may include exercising control over antenna system 312, RF transceiver 314, and physical layer processor 318. Each of the RF transceiver 314, physical layer processor 318, and controller 320 may be structurally realized with hardware (e.g., with one or more digitally-configured hardware circuits or FPGAs), as software (e.g., as one or more processors executing program code defining arithmetic, control, and I/O instructions stored in a non-transitory computer-readable storage medium), or as a mixed combination of hardware and software. NIE 310 may also include an interface 322 for communicating with (e.g. receiving instructions from, providing data to, etc.) with a core network according to some aspects.

Additionally, NIE 310 may include a memory 330, which may be internal to NIE 310 (as shown in FIG. 3) or external to NIE 310 (not shown). Memory 330 may store one or more maps of the coverage area of NIE 310 among other types of information. Each of the one or more maps may include a static layer depicting environmental elements that remain largely unchanged over longer periods of time (e.g., roads, structures, trees, etc.) and/or a dynamic layer with more frequent changes (e.g., vehicles, detected obstacles, construction, etc.). In some aspects, memory 330 may also store maps corresponding to one or more neighboring areas of NIE 310 so as to provide vehicles within its coverage area with information of neighboring coverage areas (e.g., to facilitate the process when a vehicle moves to the coverage of the neighboring NIE).

**FIG. 4A** to **FIG. 4D** each show a safety system 400 for a vehicle, such as the vehicle 100, in accordance with various aspects of the disclosure. The control system 200 may include the safety system 400. The safety system 400 may include (e.g., as part of the driving model) a computer implementation of a safety driving model. The safety driving model may be stored in the memory 104. The one or more processors 102 may be configured to implement the safety system 400. According to various aspects, the safety system 400 may include the one or more processors 102.

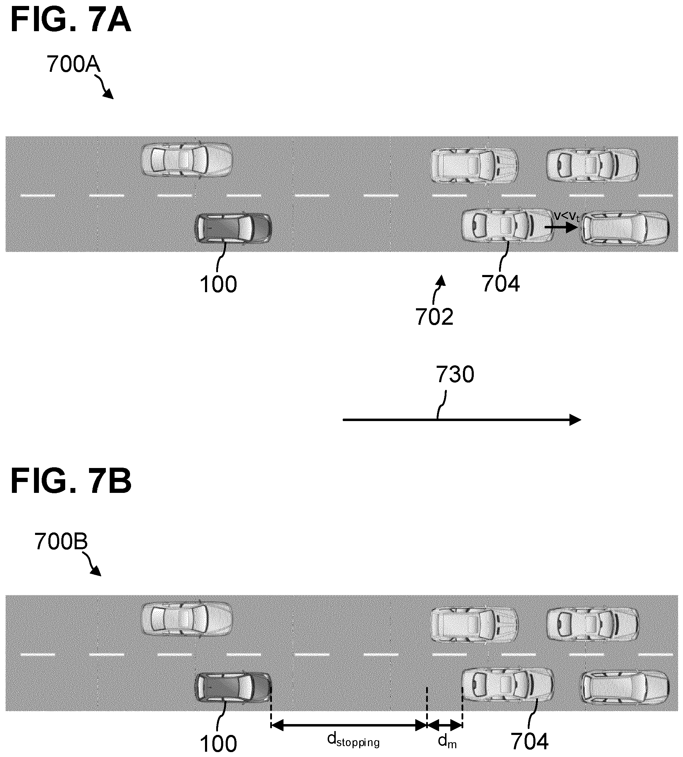

For illustration, the safety system 400 is described with reference to exemplary driving scenarios 700A, 700B, 700C, 700D shown in **FIG. 7A** to **FIG. 7D**. It is noted that the driving scenarios 700A, 700B, 700C, 700D serve as examples only and that the safety system 400 may be employed in various other driving scenarios as well, as described herein.

In the following, driving scenarios are described relative to the vehicle 100. According to various aspects, a direction may be described as a front direction, a rear direction, or a lateral direction. Herein, the front direction may refer to the moving (e.g., driving) direction of the vehicle 100 and the rear direction may be a direction opposite the front direction. A lateral direction may be perpendicular to the front direction and the rear direction. For example, the vehicle 100 as exemplarily shown in FIG. 1 may have a first lateral direction perpendicular to the front direction and the rear direction and a second lateral direction perpendicular to the front direction and the rear direction. According to various aspects, sides of the vehicle 100 may be described as a front side, a backside, and/or lateral sides. In accordance with the directions, the front side of the vehicle 100 may refer to a side of the vehicle 100 in the front direction, the backside of the vehicle 100 may refer to a side of the vehicle 100 in the rear direction, and a lateral side of the vehicle 100 may refer to a side of the vehicle 100 in a lateral direction. According to various aspects, another traffic participant may be described as a front vehicle, a rear vehicle, or a lateral vehicle. As used herein, the front vehicle may refer to a vehicle in the front direction of the vehicle 100, the rear vehicle may refer to a vehicle in the rear direction of the vehicle 100, and a lateral vehicle may refer to a vehicle in a lateral direction of the vehicle 100.

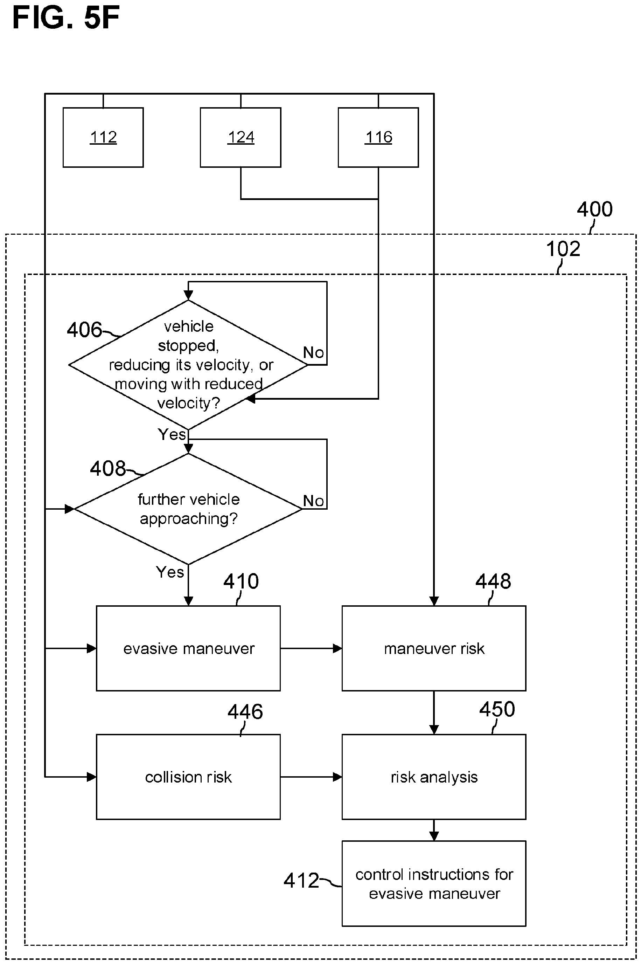

With reference to **FIG. 4A,** the one or more processors 102 may be configured to determine whether the vehicle 100 is stopped. The one or more processors 102 may be configured to determine whether the vehicle 100 is reducing its velocity to stop. The one or more processors 102 may be configured to determine whether the vehicle 100 is moving with reduced velocity. According to various aspects, the one or more processors 102 may be configured to determine 406 whether the vehicle 100 is stopped (e.g., having a velocity substantially equal to zero), is reducing its velocity to stop (e.g., slowing down towards a velocity substantially equal to zero, e.g., decelerating, e.g., braking), or is moving with reduced velocity (e.g., having a velocity greater than zero and below a predefined velocity threshold value). For example, the one or more processors 102 may be configured to determine 406 whether the vehicle 100 is stopped, reducing its velocity to stop, or moving with reduced velocity using one or more of the measurements sensors 116 and/or one or more of the position devices 124 (see, for example, FIG. 5F). In the following, various aspects are described in that the one or more processors 102 determine 406 whether the vehicle 100 is stopped, reducing its velocity to stop, or moving with reduced velocity; however, it is noted that the one or more processors 102 may be configured to determine whether one of them is fulfilled or whether or one of two are fulfilled. For example, the one or more processors may only check whether the vehicle is stopped. For example, the one or more processors may only check whether the vehicle is reducing its velocity to stop. For example, the one or more processors may only check whether the vehicle is moving with reduced velocity. For example, the one or more processors may only check whether the vehicle is stopped or reducing its velocity to stop. For example, the one or more processors may only check whether the vehicle is stopped or moving with reduced velocity. For example, the one or more processors may only check whether the vehicle is reducing its velocity to stop or moving with reduced velocity.

According to various aspects, the one or more processors 102 may be configured to continuously determine 406 whether the vehicle 100 is stopped, reducing its velocity to stop, or moving with reduced velocity. The term "reduced velocity" as used herein may refer to a velocity significantly less than a common velocity associated with a driving scenario. For example, a common velocity on a motorway may be 100 kilometers per hour (km/h) or higher such that a velocity below 80 km/h (e.g., below 50 km/h, e.g., below 30 km/h, e.g., below 10 km/h, etc.) may be a reduced velocity. For example, a common velocity in a city may be between 30 to 50 km/h such that a velocity below 20 km/h (e.g., below 15 km/h, e.g., below 10 km/h, e.g., below 5 km/h, etc.) may be a reduced velocity. The phrase "continuously determine" as used herein with reference to a decision may refer to a real-time determination whether the decision is fulfilled or not. For example, the one or more processors may determine whether the decision is fulfilled or not and if the decision is not fulfilled, the one or more processors may again determine whether the decision is fulfilled or not until the decision is fulfilled.

The one or more processors 102 may be configured to, while the vehicle 100 is stopped, reducing its velocity to stop, or moving with the reduced velocity ("Yes" in 406), determine 408 whether a further vehicle is approaching the vehicle 100 (e.g., moving towards the vehicle 100) from a backside or a lateral side. The one or more processors 102 may be configured to, while the vehicle 100 is stopped, reducing its velocity to stop, or moving with the reduced velocity ("Yes" in 406), continuously determine 408 whether a further vehicle is approaching the vehicle 100 from the backside or a lateral side. According to various aspects, the one or more processors 102 may be configured to determine 408 whether a further vehicle is approaching the vehicle 100 from the backside or a lateral side using one or more of the data ingestions devices 112 (e.g., a LIDAR sensor, e.g., a camera, e.g., a radar sensor), one or more of the measurements sensors 116 and/or one or more of the position devices 124 (see, for example, FIG. 5F).

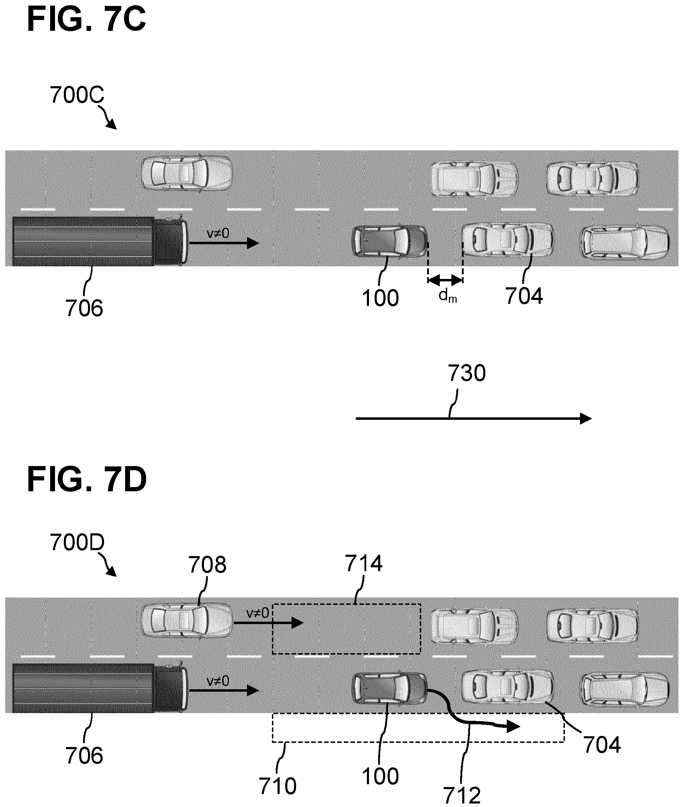

For illustration, with reference to the driving scenario 700C shown in FIG. 7C, the vehicle 100 may be stopped, reducing its velocity to stop, or moving with the reduced velocity in a moving direction 730. A further vehicle 706 may approach the vehicle 100 from the backside of the vehicle 100. The velocity, v, of the further vehicle 706 may be greater (e.g., at least 10 km/h greater, e.g., at least 20 km/h greater, e.g., at least 30 km/h greater, e.g., more than 30 km/h greater) than the velocity of the vehicle 100. According to various aspects, the further vehicle 706 may not move with the reduced velocity.

The further vehicle as described herein may be configured similar to the vehicle 100 as described with reference to FIG. 1 to FIG. 3.

The one or more processors 102 may be configured to determine an evasive maneuver 410 of the vehicle 100. The one or more processors 102 may be configured to determine an evasive maneuver 410 of the vehicle 100 such that the evasive maneuver 410 reduces a collision risk between the vehicle 100 and the further vehicle 706. The collision risk, as used herein, may, for example, represent a collision likelihood and/or impact. According to various aspects, the one or more processors 102 may be configured to determine the evasive maneuver 410 in the case that a further vehicle is approaching ("Yes" in 408). According to various aspects, the one or more processors 102 may be configured to determine the evasive maneuver 410 using one or more of the data ingestions devices 112 (e.g., a LIDAR sensor, e.g., a camera, e.g., a radar sensor), one or more of the measurements sensors 116 and/or one or more of the position devices 124 (see, for example, FIG. 5F).

An evasive maneuver as described herein may refer to any kind of moving of the vehicle 100 (e.g., including an acceleration, e.g., including a steering) in order to reduce a risk of a collision between the vehicle 100 and another traffic participant, such as the further vehicle 706. According to various aspects, the one or more processors 102 may be configured to determine the collision risk between the vehicle 100 and the further vehicle 706 (see, for example, FIG. 5F). An evasive maneuver may be, for example, moving out of a driving direction of the other traffic participant. An evasive maneuver may be, for example, moving in a position which reduces an accident severity resulting from a collision between the vehicle 100 and the other traffic participant (e.g., only a driver may sit in the vehicle 100 and the evasive maneuver may refer to moving the vehicle 100 such that an expected injury of the driver due to the collision is reduced).

According to various aspects, the one or more processors 102 may be configured to provide control instructions 412 to control the vehicle 100 to perform the evasive maneuver 410. The one or more processors 102 may be configured to provide the control instructions 412 to the mobility system 120 and the mobility system 120 may be configured to control the vehicle 100 to perform the evasive maneuver 410 in accordance with the control instructions 412. For illustration, with reference to the driving scenario 700D shown in FIG. 7D, the control instructions 412 may include instructions to move the vehicle 100 next to a vehicle 704 in front of the vehicle 100 (in some aspects also referred to as front vehicle 704) and the mobility system 120 may control the vehicle 100 to move next to the front vehicle 704 (following the arrow 712). According to various aspects, the control instructions 412 may include control instructions to control the vehicle 100 to accelerate to perform the evasive maneuver 410. According to various aspects, the control instructions 412 may include control instructions to control the vehicle 100 to steer to perform the evasive maneuver 410. Illustratively, the safety system 400 (e.g., employing the one or more processors 102) may determine an evasive maneuver 410 to reduce a collision risk between the further vehicle 706 and may cooperatively with the mobility system 120 move the vehicle 100 to reduce the collision risk (e.g., by moving the vehicle 100 out of the path of the further vehicle 706).

According to various aspects, the control instructions 412 to control the vehicle 100 to perform the evasive maneuver 410 may include control instructions to control the vehicle 100 to inform a driver of the vehicle 100 to perform the evasive maneuver 410 (e.g., in the case that the vehicle 100 is a human-operated vehicle). According to various aspects, the control instructions 412 to control the vehicle 100 to perform the evasive maneuver 410 may include control instructions to control the vehicle 100 to automatically perform the evasive maneuver 410 (e.g., in the case that the vehicle 100 is an autonomous vehicle).

The phrase "control instructions to control the vehicle" as used herein to do or perform a task may refer to information provided to a driver of the vehicle to do or perform the task and/or may refer to the vehicle 100 performing the task on its own. For example, the vehicle may be an autonomous or a semi-autonomous vehicle and control instructions to control the vehicle to perform a specific task may refer the vehicle performing the task (optionally the information may be provided to a driver or passengers of the vehicle in addition). For example, the vehicle may be a human-operated vehicle and control instructions to control the vehicle to perform a specific task may refer to information provided to the driver of the vehicle to perform the task. Information provided to a driver, as used herein, may refer to any kind of aural, visual, and/or audiovisual information, such as a voice message, a message or symbol on a screen, an indicator/warning lamp (e.g., in a dashboard of the vehicle 100), notes on a dashboard such as a braking recommendation (e.g., slower), an audio feedback, etc. For example, the vehicle may be configured to drive under certain conditions autonomously and may be human-operated under other conditions; in this case the control instructions to control the vehicle to perform a specific task may refer the vehicle performing the task and/or to information provided to the driver of the vehicle to perform the task.

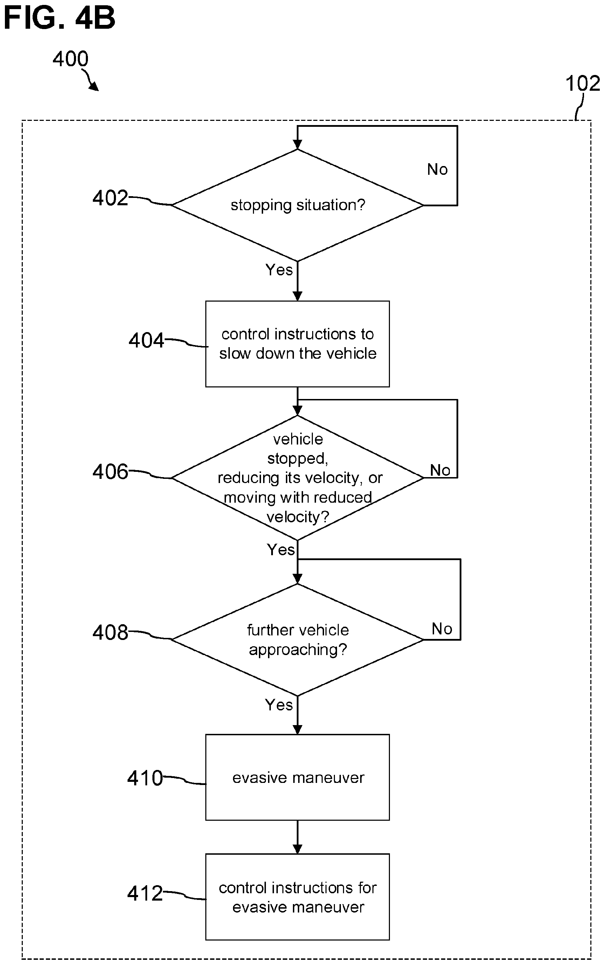

With reference to **FIG. 4B,** the one or more processors 102 may be configured to determine whether the vehicle 100 has to stop or reduce its velocity. According to various aspects, the vehicle 100 may move with a specific velocity and the one or more processors 102 may be configured to continuously determine whether the vehicle 100 has to stop or reduce its velocity. According to various aspects, the one or more processors 102 may be configured to determine 402 whether the vehicle 100 is approaching a stopping situation in a driving direction of the vehicle 100. The one or more processors 102 may be configured to continuously determine 402 whether the vehicle 100 is approaching a stopping situation ("No" in 402). According to various aspects, the one or more processors 102 may be configured to determine that the vehicle 100 has to stop or reduce its velocity in the case that the vehicle 100 is approaching a stopping situation ("Yes" in 402). A stopping situation may be, among others, a traffic jam, a yellow traffic light, a red traffic light, stop-and-go traffic, a driver of a front vehicle enjoying a scenic view, a railroad crossing, etc.

According to various aspects, the one or more processors 102 may be configured to provide control instructions 404 to slow down the vehicle 100 in the case that the vehicle 100 is approaching a stopping situation ("Yes" in 402). For example, the safety system 400 (e.g., the one or more processors 102) may be configured to provide the control instructions 404 to slow down the vehicle 100 to the mobility system 120. The mobility system 120 may be configured to control the vehicle 100 to slow down in accordance with the control instructions 404.

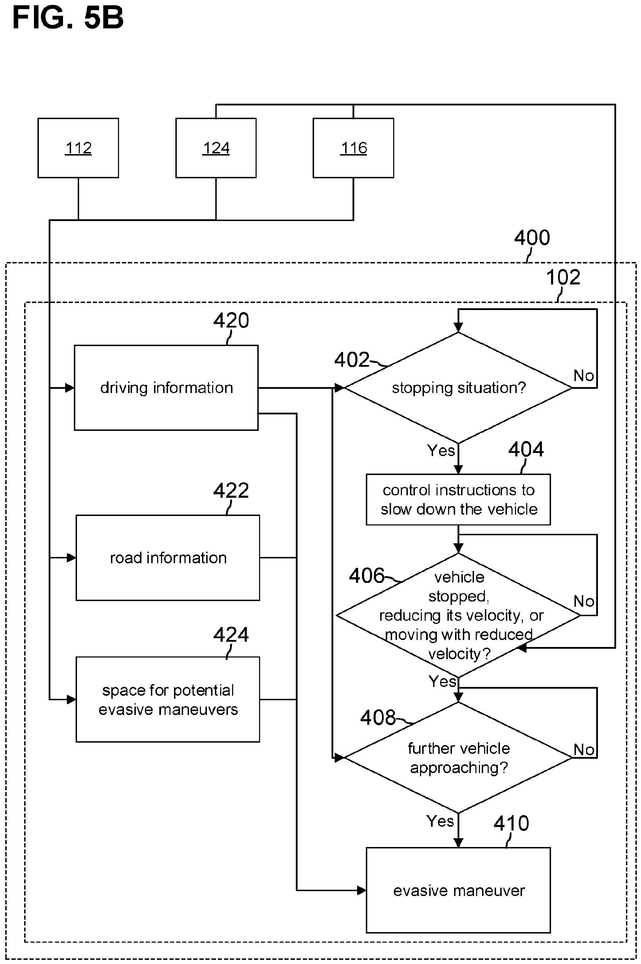

According to various aspects, the one or more processors 102 may be configured to, in the case that the vehicle 100 is approaching a stopping situation ("Yes" in 402), determine a stopping distance of the vehicle 100 such that a minimum distance between the stopped or slowed down vehicle 100 and the stopping situation is equal to or greater than a predefined distance threshold value. The one or more processors 102 may be configured to provide control instructions to control the vehicle 100 to stop or reduce its velocity in accordance with the determined stopping distance (e.g., in the case of an autonomous vehicle, e.g., to the mobility system 120). The one or more processors 102 may be configured to provide control instructions to control the vehicle 100 to inform (e.g., aurally, e.g., visually) a driver of the vehicle 100 (e.g., in the case of a human-operated vehicle) stop or slow in down in accordance with the determined stopping distance (see, for example, description with reference to FIG. 5B).

According to various aspects, the one or more processors 102 may be configured to determine 408 whether a further vehicle is approaching the vehicle 100 from a backside or a lateral side after it has been determined that the vehicle 100 has to stop or reduce its speed. The one or more processors 102 may be configured to determine 408 whether a further vehicle is approaching the vehicle 100 from a backside or a lateral side in a predetermined time after it has been determined that the vehicle 100 has to stop or reduce its velocity. The one or more processors 102 may be configured to determine the predetermined time based on a driving situation. The predetermined time may be predefined and stored in the memory 104. According to various aspects, the one or more processors 102 may be configured to determine 408 whether a further vehicle is approaching the vehicle 100 from a backside or a lateral side as long as the vehicle 100 is stopped, reducing its velocity to stop, or moving with reduced velocity.

According to various aspects, the one or more processors 102 may be configured to determine 406 whether the vehicle 100 is stopped, reducing its velocity to stop, or moving with reduced velocity (as described with reference to, for example, FIG. 4A).

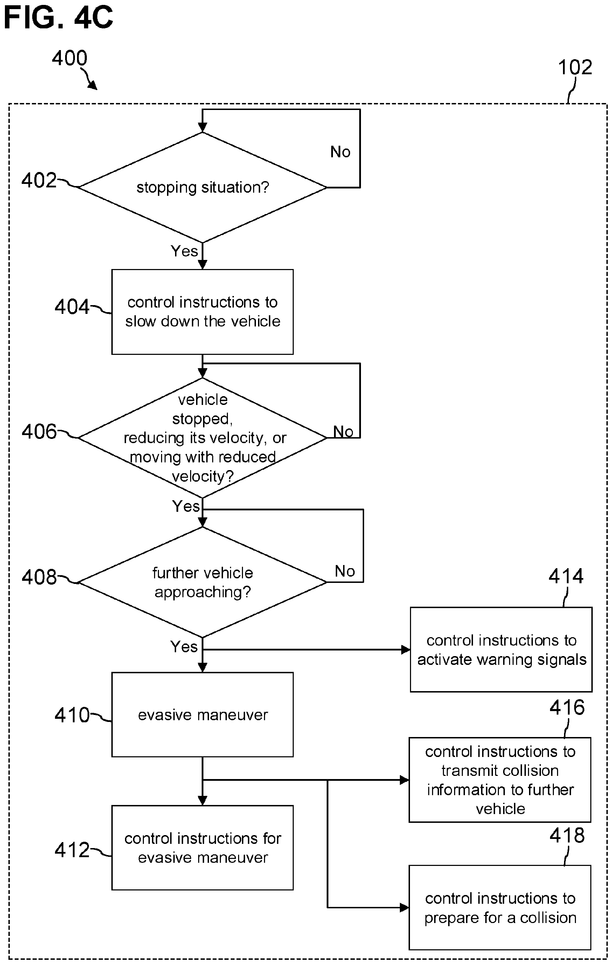

With reference to **FIG. 4C,** the one or more processors 102 may be configured to provide, in the case that a further vehicle is approaching the vehicle 100 ("Yes" in 408), control instructions 414 to control the vehicle 100 to activate one or more warning signals. A warning signal may be an aural, a visual, or an audio-visual warning signal indicating the collision risk to other traffic participants (e.g., the further vehicle). The one or more warning signals may include at least one of: a horn, an indicator, a flash light, a rear light, a front light a hazard light, etc. For example, the control instructions 414 may include control instructions to active several indicators, flash lights, rear lights, front lights, hazard lights, etc. The term "indicator" as described herein may refer to a device (e.g., a turn signal, e.g., a direction indicator, e.g., a turn indicator, e.g., a blinker) indicating a direction, such as a direction the vehicle 100 is intended to move to.

According to various aspects, the one or more processors 102 may be configured to provide control instructions 416 to control the vehicle 100 to transmit collision information to the further vehicle. For example, the one or more processors 102 may be configured to provide control instructions 416 to control the vehicle 100 to transmit the collision information to the further vehicle via a communication channel between the vehicle 100 and the further vehicle. For example, the communication processor 218 may be configured to implement the communication channel. The communication processor 218 may implement one or more vehicle-to-everything (V2X) communication protocols, such as a vehicle-to-vehicle (V2V) communication protocol allowing a communication between the vehicle 100 and the further vehicle (see, for example, description with reference to FIG. 2 and FIG. 3). The collision information may include any kind of information related to a collision between the vehicle 100 and the further vehicle, such as a collision risk between the vehicle 100 and the further vehicle, the evasive maneuver 410 to be performed, a number of passengers in the vehicle 100, and/or seat positions of passengers in the vehicle 100, among others.

According to various aspects, the one or more processors 102 may be configured to provide control instructions 418 to control the vehicle 100 to prepare for a collision between the vehicle 100 and the further vehicle. For example, the control instructions 418 may include aural and/or visual information to warn a driver of the vehicle 100 (e.g., regarding the collision, e.g., a possibility of a collision), an airbag (e.g., an external airbag, e.g., the further vehicle may approach from a rear direction and an external airbag in the rear direction may be activated), a position of a seat in the vehicle 100 (e.g., to bring the seat in an upright position), and/or a seat belt pretensioner (e.g., a seat belt pretensioner of a seat the driver and/or passengers sit on), among others.

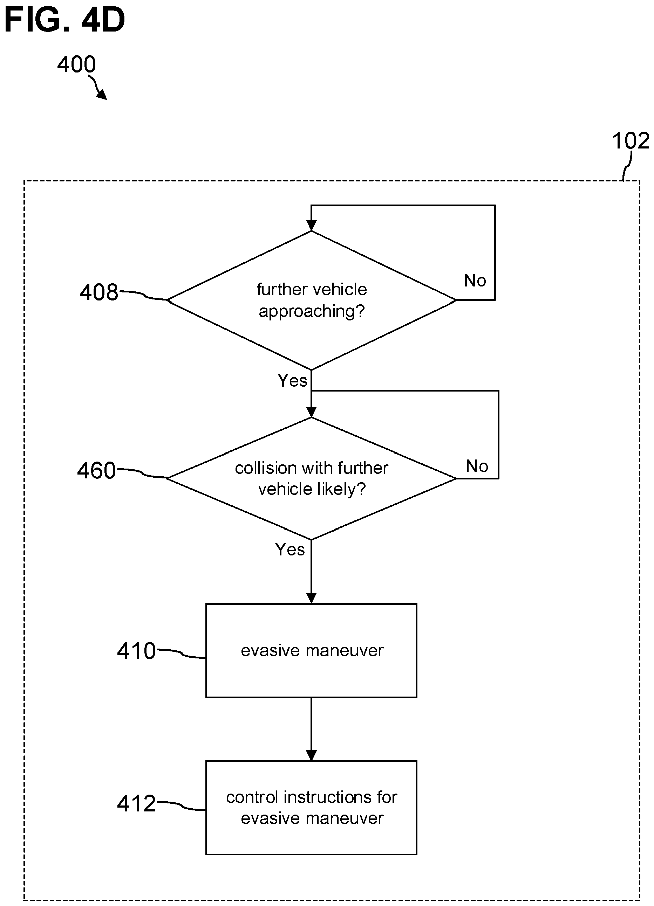

With reference to **FIG. 4D,** the one or more processors 102 may be configured to determine 408 whether a further vehicle is approaching the vehicle 100 from a backside or a lateral side. The one or more processors 102 may be configured to determine 460 whether a collision of the further vehicle with the vehicle 100 is likely. For example, the one or more processors 102 may be configured to determine 460 whether a collision of the further vehicle with the vehicle 100 is likely in the case that the further vehicle is approaching the vehicle 100 ("Yes" in 408). The one or more processors 102 may be configured to determine the evasive maneuver 410 such that the evasive maneuver 410 reduces the collision risk (e.g., the collision likelihood and/or impact) between the vehicle 100 and the further vehicle. According to various aspects, the one or more processors 102 may be configured to determine the evasive maneuver 410 in the case that the collision between the vehicle 100 and the further vehicle is likely ("Yes" in 460). The one or more processors 102 may be configured to provide the control instructions 412 to control the vehicle 100 to perform the evasive maneuver 410.

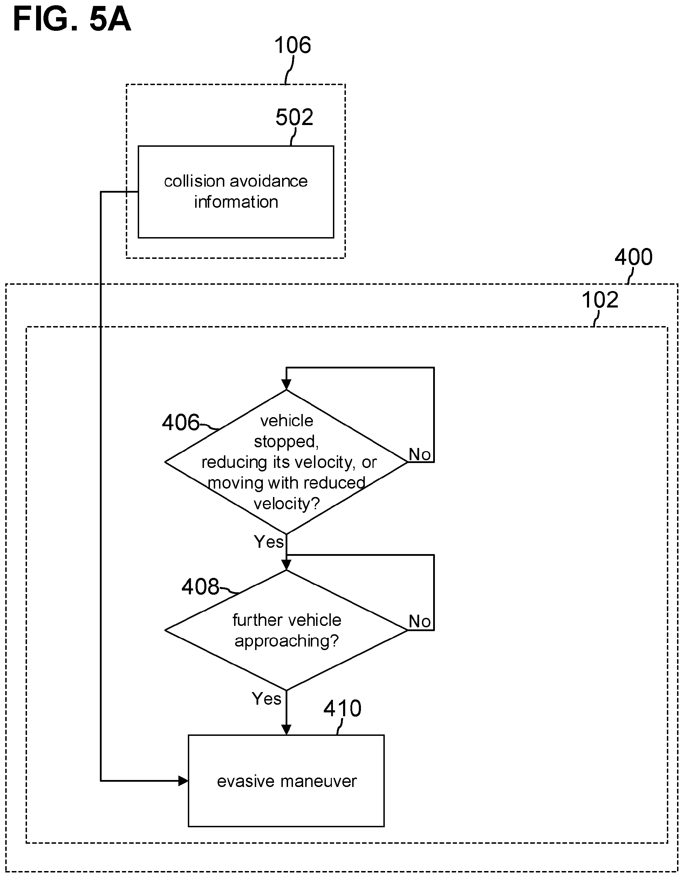

**FIG. 5A** to **FIG. 5F** each show the safety system 400 in accordance with various aspects of the disclosure. According to various aspects, the safety system 400 may interact (e.g., communicate) with various components of the control system 200, as described in the following. However, it is noted that one or more of the components of the control system 200 may also be part of the safety system 400.

With reference to **FIG. 5A,** the further vehicle may be configured to perform a collision avoidance maneuver to reduce a risk of the collision between the vehicle 100 and the further vehicle. For example, the further vehicle may include a safety system configured to determine a collision avoidance maneuver and may include a mobility system to perform the collision avoidance maneuver. According to various aspects, the further vehicle may be configured to provide collision avoidance information 502 to the vehicle 100 (e.g., via the communication channel between the vehicle 100 and the further vehicle). The collision avoidance information 502 may include information about the collision avoidance maneuver. According to various aspects, the one or more processors 102 may be configured to determine the evasive maneuver 410 using the collision avoidance information 502. Illustratively, the further vehicle may steer to reduce a collision risk between the further vehicle and the vehicle 100 and the safety system 400 may determine the evasive maneuver 410 such that the collision risk is even further reduced (e.g., steering in a direction opposite the direction of the further vehicle). According to various aspects, the further vehicle and the vehicle 100 may communicate to cooperatively determine the collision avoidance maneuver and the evasive maneuver 410 such that the collision risk is reduced.

With reference to **FIG. 5B**, the one or more data ingestion devices 112, the one or more position devices 124, and/or the one or more measurement device 116 may be configured to provide data to the safety system 400.

The one or more processors 102 may be configured to determine driving information 420. The driving information 420 may, for example, include information regarding a surrounding of the vehicle 100. For example, the one or more data ingestion devices 112 may include one or more sensors (e.g., at least one LIDAR sensor, at least one radar sensor, and/or at least one camera) for perceiving the surrounding of the vehicle 100. The sensors may provide data representing the surrounding of the vehicle 100. According to various aspects, the one or more processors 102 (e.g., the data ingestion processor 214) may be configured to detect objects (e.g., other traffic participants) in the surrounding of the vehicle 100 (e.g., using image-based feature detection and localization, e.g., by employing image segmentation) and the driving information 420 may include information regarding the detected objects. Illustratively, a surrounding of the vehicle 100 is monitored.

According to various aspects, the one or more position sensors 124 may provide data representing a position of the vehicle 100 and the driving information 420 may include the data representing the position of the vehicle 100.

According to various aspects, the one or more measurement devices 116 may provide data representing vehicle-specific data of the vehicle 100 (e.g., a velocity of the vehicle 100) and the driving information 420 may include the vehicle-specific data. For example, the one or more measurement devices 116 may include an odometer and/or a visual odometer configured to measure a velocity of the vehicle 100. According to various aspects, the one or more measurement devices 116 may provide environmental data representing environmental conditions in the surrounding of the vehicle 100. For example, the one or more measurement devices 116 may include a humidity sensor (e.g., a hygrometer) configured to measure a humidity, a distance meter configured to measure a roughness of a ground, a pressure sensor configured to measure a barometric pressure, a temperature sensor configured to measure a temperature in the surrounding of the vehicle 100.

The one or more processors 102 may be configured to determine road information 422. The road information 422 may represent a road (e.g., a type of the road, e.g., a number of lanes, etc.) the vehicle 100 is on. For example, the road information 422 may indicate whether the vehicle is on a highway, a motorway, a road with multiple lanes (e.g., in driving direction of the vehicle 100, e.g., opposite the driving direction of the vehicle 100), a road with a hard shoulder, and/or a road with a road verge, among others. According to various aspects, the one or more processors 102 may be configured to determine the road information 422 using data representing the surrounding of the vehicle 100 (e.g., the one or more data ingestion devices 112 may provide the data representing the surrounding of the vehicle 100), the data representing the position (e.g., GPS data) of the vehicle 100 (e.g., the one or more position devices 124 may provide the data representing the position of the vehicle 100, e.g., the memory 104 may store the map database 204 and the map database 204 may include data representing the position of the vehicle 100), and/or the data representing the environmental conditions in the surrounding of the vehicle 100 (e.g., the one or more measurement devices 116 may provide the data representing the environmental conditions in the surrounding of the vehicle 100).

According to various aspects, the one or more processors 102 may be configured to determine a driving situation of the vehicle 100 using the driving information 420 and the road information 422. The driving situation of the vehicle 100 may be an operational design domain (ODD) the vehicle 100 operates in.

According to various aspects, the one or more processors 102 may be configured to determine 402 whether the vehicle 100 is approaching a stopping situation using the driving situation of the vehicle 100. The one or more processors 102 may be configured to determine whether a velocity of a front vehicle (e.g., a vehicle in front of the vehicle with respect to the driving direction of the vehicle 100, e.g., a yet further vehicle) is less than a predefined velocity threshold value. According to various aspects, the driving information 420 representing the surrounding of the vehicle 100 may include data representing the velocity of the front vehicle. The one or more processors 102 may be configured to determine a stopping situation (that the vehicle 100 has to stop or reduce its velocity) in the case that the velocity of the front vehicle is less than the predefined velocity threshold value. According to various aspects, the predefined velocity threshold value may depend on the type of road the vehicle 100 is on (e.g., as represented by the road information 422). Exemplary driving scenarios 700A, 700B, 700C, 700D with a stopping situation is shown in FIG. 7A to FIG. 7C. The vehicle 100 may approach a stopping situation 702 in a driving direction 730 of the vehicle 100. The one or more processors 102 may determine that a velocity, v, of a front vehicle 704 is less than a predefined velocity threshold value, $v_t$ (see driving scenario 700A in FIG. 7A). The one or more processors 102 may be configured to determine a stopping distance, $d_{stopping}$, of the vehicle 100 such that a minimum distance, $d_m$, between the stopped or slowed down vehicle 100 and the front vehicle 704 is equal to or greater than a predefined distance threshold value (see driving scenario 700B in FIG. 7B). The predefined distance threshold value may be selected such that the stopped or slowed down vehicle 100 is capable to perform an evasive maneuver. The one or more processors 102 may be configured to determine the predefined distance threshold value using the length of the vehicle 100 and/or the turning radius of the vehicle 100 (e.g., the memory 104 may store the length of the vehicle 100 and/or the turning radius of the vehicle 100). For example, the distance of the vehicle 100 to the front vehicle 704, $d_{front}$, may be given by equation (1):

$$d_{stopping} \leq d_{front} + d_m \qquad (1).$$

The stopping distance, $d_{stopping}$, may be determined by equation (2):

$$d_{stopping} = \frac{1}{2}\frac{v_{100}^2}{a_{brake}} \qquad (2).$$

Here, $v_{100}$ may be the velocity of the vehicle 100 and $a_{brake}$ may be the deceleration of the vehicle 100 due to braking.

Using equations (1) and (2), the braking deceleration, $a_{brake}$, of the vehicle 100 may be determined by equation (3):

$$a_{brake} \geq \frac{1}{2}\frac{v_{100}^2}{d_{front}-d_m} \qquad (3).$$

According to various aspects, the one or more processors 102 may be configured to determine the minimum distance, $d_m$, using the length of the vehicle 100, the maximum acceleration of the vehicle 100 (e.g., using an engine performance of the vehicle 100), the turning radius of the vehicle 100, etc. For example, the minimum distance, $d_m$, may be about the length of the vehicle 100.

According to various aspects, the one or more processors 102 may be configured to provide control instructions to control the vehicle 100 to stop or reduce its velocity (e.g., via informing a driver of the vehicle 100 in the case of a human-operated vehicle, e.g., via automatically in the case of an autonomous or semi-autonomous vehicle) in accordance with the determined stopping distance, $d_{stopping}$ (see driving scenario 700C in FIG. 7C). According to various aspects, the one or more processors 102 may be configured to determine whether the vehicle 100 can stop within the stopping distance, $d_{stopping}$, using a maximum braking intensity (e.g., a maximal braking intensity the vehicle 100 is capable to). The one or more processors 102 may be configured to provide control instructions to control the vehicle 100 to stop using the maximum braking intensity in the case that the vehicle 100 cannot stop within the stopping distance using the maximum braking intensity. Illustratively, the minimum distance, $d_m$, may allow the vehicle 100 to perform various evasive maneuvers and in the case that the minimum distance, $d_m$, cannot be achieved the vehicle 100 is stopped such that a maximum possible distance between the vehicle 100 and the front vehicle 704 is achieved to allow for at least one evasive maneuver. Illustratively, the greater the distance between the vehicle 100 and the front vehicle 704 the higher is a number of possible evasive maneuvers. For example, a greater distance between the vehicle 100 and the front vehicle 704 may allow to perform an evasive maneuver with a higher velocity and/or less steering.

With reference to FIG. 5B, the one or more processors 102 may be configured to determine 406 whether the vehicle 100 is stopped, reducing its velocity to stop, or moving with reduced velocity using the data representing the position of the vehicle 100 and/or the data representing vehicle-specific data, such as the velocity of the vehicle 100. According to various aspects, the one or more processors 102 may be configured to determine 406 whether the vehicle 100 is stopped, reducing its velocity to stop, or moving with reduced velocity using at least one control signal (e.g., the control system 200 may provide the control signal, such as a control signal to stop, to reduce the velocity to stop, or to move with reduced velocity).

According to various aspects, the one or more processors 102 may be configured to determine 408 whether a further vehicle is approaching the vehicle 100 from the backside or a lateral side using the driving situation of the vehicle 100 (e.g., using a parking camera, e.g., using one or more rear-facing sensors, such as an ultrasonic sensor, e.g., using a radar sensors and/or a camera for highway/traffic jam assists). For example, the one or more processors 102 may determine 408 whether a further vehicle is approaching the vehicle 100 from the backside or a lateral side using the data representing the surrounding of the vehicle 100 and/or the detected objects in the surrounding of the vehicle 100.

According to various aspects, the one or more processors 102 may be configured to determine a space 424 for potential evasive maneuvers of the vehicle 100. For example, the one or more processors 102 may be configured to determine the space 424 for potential evasive maneuvers of the vehicle 100 using the data representing the surrounding of the vehicle 100 and/or the detected objects in the surrounding of the vehicle 100. The space 424 may represent an unoccupied area in the surrounding of the vehicle 100 (e.g., an area not occupied by any object, e.g., an area the vehicle 100 could move to).

According to various aspects, the one or more processors 102 may be configured to determine the evasive maneuver 410 using the space 424 for potential evasive maneuvers of the vehicle 100. The one or more processors 102 may be configured to determine the evasive maneuver 410 using the space 424 for potential evasive maneuvers of the vehicle 100 and/or the driving situation (e.g., the driving information 420 and/or the road information 422). The one or more processors 102 may be configured to determine a type of the space 424 using the driving information 420 and/or the road information 422. For example, the one or more processors 102 may be configured to determine the type of the space 424 as being a hard shoulder, a road verge, a rescue lane, etc.

With reference to the exemplary driving scenario 700C shown in FIG. 7C, the one or more processors 102 may determine that the further vehicle 706 is approaching the vehicle 100 from the backside using the driving information 420. The one or more processors 102 may determine an unoccupied space 710 on the right of the vehicle 100 with respect to the driving direction 730 and an unoccupied space 714 on the left of the vehicle 100 with respect to the driving direction 730 as the space for potential evasive maneuvers (see driving scenario 700D in FIG. 7D). The one or more processors 102 may determine that the vehicle 100 is on a two-lane road with a hard shoulder using the road information 422 and may determine that the vehicle 100 is on the right line (with respect to the driving direction 730) of the two-lane road using the driving information 420. The one or more processors 102 may further determine that another vehicle 708 is approaching on the other lane and may determine that the potential evasive maneuver using the unoccupied space 714 of the other lane has a higher risk (since the other vehicle 708 may move into the unoccupied space 714) than the potential evasive maneuver using the unoccupied space 710 of the hard shoulder. The one or more processors 102 may determine the evasive maneuver 410 as moving on the hard shoulder (e.g., following the arrow 712).

In an example referring to FIG. 7C and FIG. 7D, the vehicle 100 may stop at the end of a traffic jam on a highway and the further vehicle 706 may be a truck and may approach the vehicle 100 with 22 m/s. The deceleration of the truck may be between 4-7 m/s$^2$ depending on its load, surface etc. Hence, the truck needs between 3 to 5 seconds and 34 to 60 meters to stop. Thus, the vehicle 100 may have 3 to 5 seconds to perform the evasive maneuver 410. Considering an exemplary acceleration of the vehicle 100 of about 2 m/s$^2$, the vehicle 100 is capable to move out of the driving corridor of the truck within 2 to 3 seconds.

According to various aspects, the vehicle 100 may start to prepare for the determined evasive maneuver 410 once the determined collision risk increases. For example, with increasing collision risk the vehicle 100 may start to steer in accordance with the evasive maneuver 410. For example, with increasing collision risk the vehicle 100 may start to slightly move in direction of the evasive maneuver 410. Illustratively, this may reduce the time required to perform the evasive maneuver 410 (e.g., the vehicle 100 has not to accelerate from stand still, e.g., the vehicle 100 has not to steer).

According to various aspects, the one or more processors 102 may be configured to determine the evasive maneuver 410 using a length of the vehicle 100, a maximum acceleration of the vehicle 100 (e.g., using an engine performance of the vehicle 100), a turning radius of the vehicle 100, etc. For example, the memory 104 may store the length of the vehicle 100, the maximum acceleration of the vehicle 100, the turning radius of the vehicle 100, etc. and the one or more processors 102 may be configured to read the memory 104.

According to various aspects, the mobility system 120 may be configured to control the vehicle 100 to perform the evasive maneuver 410 in accordance with the control instructions 412 (e.g., using a park assist).

According to various aspects of the disclosure, the safety system is capable to reduce a number and/or in impact of rear-end collisions using features (e.g., devices, e.g., software) that are already present in conventional vehicles, such as one or more ultrasonic sensors and/or one or more cameras for parking, one or more radar sensors and/or one or more cameras for highway/traffic jam assists, and/or one or more software implementations for semi-autonomous driving and/or park assists.

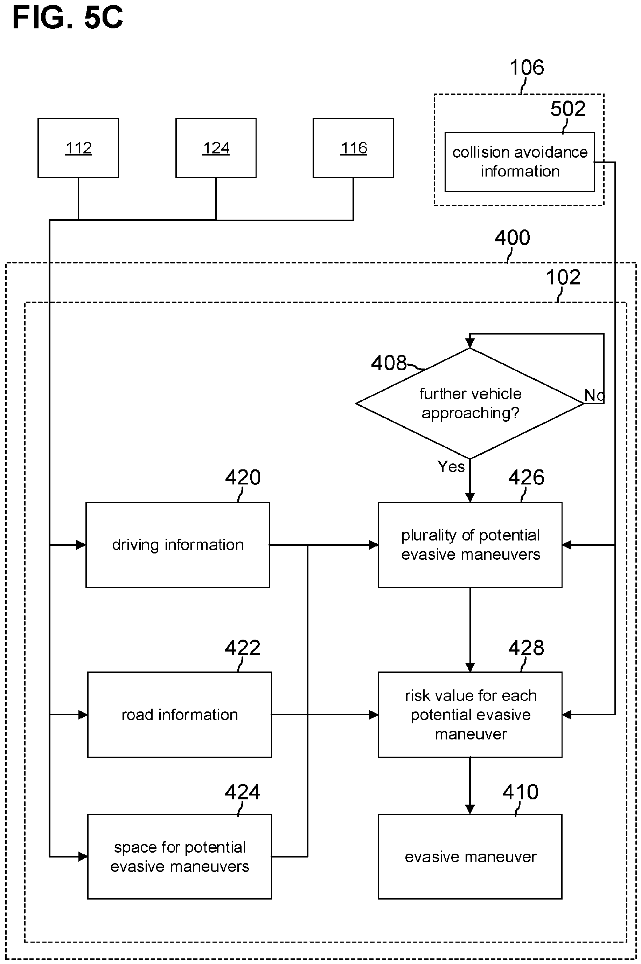

With reference to **FIG. 5C,** the one or more processors 102 may be configured to determine a plurality of potential evasive maneuvers 426. According to various aspects, the one or more processors 102 may be configured to determine the plurality of potential evasive maneuvers 426 using the driving information 420, the road information 422, the space for potential evasive maneuvers, and/or the collision avoidance information 502. According to various aspects, the one or more processors 102 may be configured to determine a respective risk value 428 for each potential evasive maneuver of the plurality of potential evasive maneuvers 426. The risk value may represent a risk associated with the respective potential evasive maneuver. According to various aspects, the one or more processors 102 may be configured to determine the potential evasive maneuver of the plurality of potential evasive maneuvers 426 having the lowest risk value as the evasive maneuver 410 of the vehicle 100.

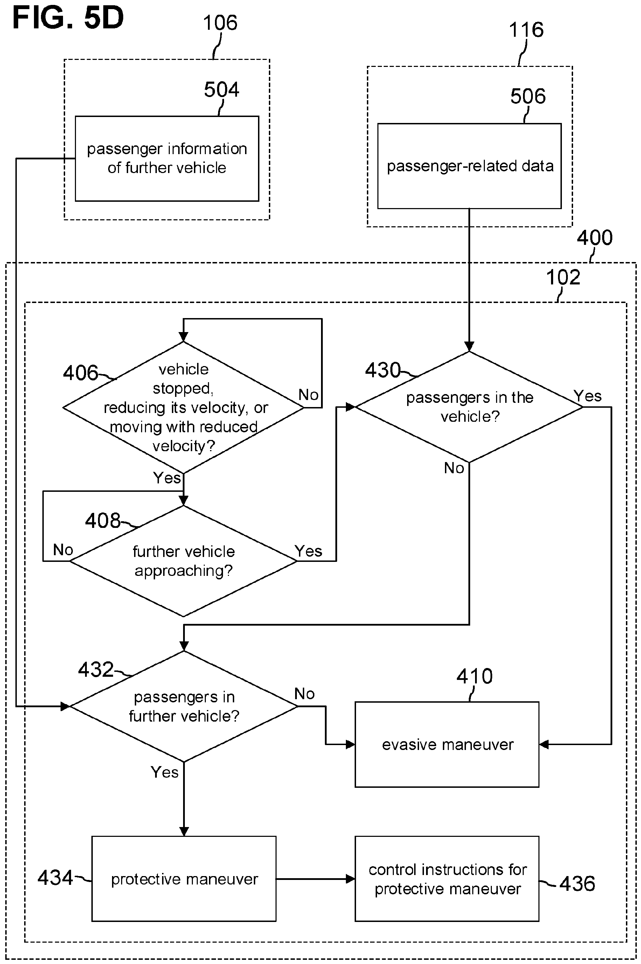

With reference to **FIG. 5D,** the further vehicle may be configured to provide passenger information 504 of the further vehicle to the vehicle 100 (e.g., via the communication channel between the vehicle 100 and the further vehicle). The passenger information 504 may include information whether there are passengers in the further vehicle.

According to various aspects, the vehicle 100 may be an autonomous vehicle. For example, the control system 200, the safety system 400 and the mobility system 120 may be configured to control the autonomous vehicle without any driver necessary. Hence, the autonomous vehicle may move without any passengers in the vehicle. According to various aspects, the one or more measurement devices 116 (e.g., the sensors configured to determine whether a passenger sits on a seat in the vehicle or whether the seat is empty) may be configured to provide passenger-related data 506 to the safety system 400. The passenger-related data 506 may represent whether there are passengers in the vehicle 100. In the case that there are passengers in the vehicle 100, the passenger-related data 506 may represent which seat is occupied by a passenger and which is not.

According to various aspects, the one or more processors 102 may be configured to determine 430 whether there are passengers in the vehicle 100. For example, the one or more processors 102 may determine 430 whether there are passengers in the vehicle 100 in the case that the further vehicle is approaching the vehicle 100 ("Yes" in 408). The one or more processors 102 may be configured to determine the evasive maneuver 410 in the case that there are passengers in the vehicle 100 ("Yes" in 430), such as in the case of a human-operated vehicle. The one or more processors 102 may be configured to determine 432 whether there are passengers in the further vehicle in the case that there are no passengers in the vehicle 100 ("No" in 430), such as in the case of an autonomous vehicle. The one or more processors 102 may be configured to determine 432 whether there are passengers in the further vehicle using the passenger information 504 of the further vehicle. The one or more processors 102 may be configured to determine the evasive maneuver 410 in the case that there are no passengers in the further vehicle ("No" in 432). According to various aspects, the one or more processors 102 may be configured to, in the case that there are passengers in the further vehicle ("Yes" in 432), determine a protective maneuver 434. The one or more processors 102 may be configured to determine the protective maneuver 434 such that the protective maneuver 434 reduces an expected injury of each of the passengers in the further vehicle. According to various aspects, the one or more processors 102 may be configured to provide control instructions 436 to control the vehicle 100 to perform the protective maneuver 434. Illustratively, the vehicle 100 may be an autonomous vehicle without any passengers and may perform the protective maneuver 434 to protect the passengers in the further vehicle.

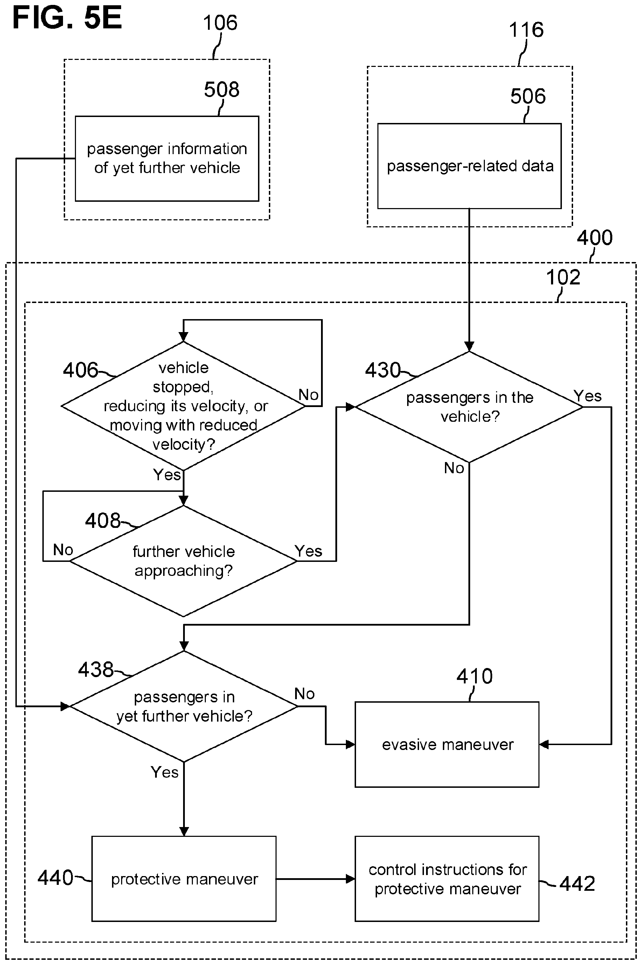

As described herein, the vehicle 100 may be stopped or move with reduced velocity behind a front vehicle (see, for example FIG. 7C and FIG. 7D). With reference to FIG. 5E, the front vehicle may be configured to provide passenger information 508 of the front vehicle to the vehicle 100 (e.g., via a communication channel between the vehicle 100 and the front vehicle). The passenger information 508 of the front vehicle may include information whether there are passengers in the front vehicle. The one or more processors 102 may be configured to determine 430 whether there are passengers in the vehicle 100. The one or more processors 102 may be configured to determine 438 whether there are passengers in the front vehicle in the case that there are no passengers in the vehicle 100 ("No" in 430), such as in the case of an autonomous vehicle. The one or more processors 102 may be configured to determine 438 whether there are passengers in the further vehicle using the passenger information 508 of the front vehicle. The one or more processors 102 may be configured to determine the evasive maneuver 410 in the case that there are no passengers in the front vehicle ("No" in 438). According to various aspects, the one or more processors 102 may be configured to, in the case that there are passengers in the front vehicle ("Yes" in 438), determine a protective maneuver 440. The one or more processors 102 may be configured to determine the protective maneuver 440 such that the protective maneuver 440 reduces an expected injury of each of the passengers in the front vehicle. According to various aspects, the one or more processors 102 may be configured to provide control instructions 442 to control the vehicle 100 to perform the protective maneuver 440. Illustratively, the vehicle 100 may be an autonomous vehicle without any passengers and may perform the protective maneuver 440 to protect the passengers in the front vehicle.

According to various aspects, the one or more processors 102 may be configured to provide control instructions to control the vehicle 100 to transmit collision information to the front vehicle. For example, the one or more processors 102 may be configured to provide control instructions to control the vehicle 100 to transmit the collision information to the front vehicle via a communication channel between the vehicle 100 and the front vehicle. For example, the communication processor 218 may be configured to implement the communication channel. The communication processor 218 may implement one or more vehicle-to-everything (V2X) communication protocols, such as a vehicle-to-vehicle (V2V) communication protocol allowing a communication between the vehicle 100 and the front vehicle (see, for example, description with reference to FIG. 2 and FIG. 3). The collision information may include information associated with a collision, such as a collision risk between the vehicle 100 and the further vehicle, a collision risk between the vehicle and the front vehicle resulting from the collision between the vehicle 100 and the further vehicle, the evasive maneuver 410, a number of passengers in the vehicle 100, and/or seat positons of passengers in the vehicle 100 in the case that there are passengers in the vehicle 100, among others. According to various aspects, the front vehicle may be configured to provide information about the front vehicle to the vehicle 100. The information about the front vehicle may include a type of the front vehicle, a weight of the front vehicle, a number of passengers in the front vehicle, and/or seat positons of passengers in the front vehicle in the case that there are passengers in the front vehicle, among others.

With reference to **FIG. 5F,** the one or more processors 102 may determine the evasive maneuver 410 and may be configured to determine a maneuver risk value 448. The maneuver risk value 448 may represent a risk associated with the evasive maneuver 410. According to various aspects, the one or more processors 102 may be configured to determine the maneuver risk value 448 using data provided by the one or more data ingestion devices 112, the one or more position devices, and/or the one or more measurement devices 116. The one or more processors 102 may be configured to determine a collision risk value 446. The collision risk value 446 may represent a collision risk (e.g., a collision likelihood and/or impact) between the vehicle 100 and the further vehicle. According to various aspects, one or more processors 102 may be configured to determine the collision risk value 446 of the collision risk between the vehicle 100 and the further vehicle using a collision risk model (e.g., a collision risk model that is aligned with the functional safety standard ISO 26262). According to various aspects, the one or more processors 102 may be configured to determine the maneuver risk value 448 using the collision risk model. The collision risk model may be, for example, a Responsibility-Sensitive Safety (RSS) metric, a constant acceleration model, or any other type of collision risk model capable to determine a collision risk between at least two traffic participants. According to various aspects, the collision risk model may consider a velocity difference between the vehicle 100 and the further vehicle in the moment of a collision and the collision risk value may represent an accident severity considering the velocity difference. According to various aspects, the collision risk model may consider a type and/or weight of the further vehicle and the collision risk value may represent an accident severity considering the type and/or weight of the further vehicle (e.g., the further vehicle may be a truck and a collision with the truck may lead to a much higher accident severity than a collision with a rather small vehicle). In the following, an exemplary collision risk model is described; however, it is noted that any other collision risk model capable to determine a collision risk between at least two traffic participants may be used. The exemplary collision risk model may be an uncertainty-aware collision risk model. The collision risk, $R_e$, may be given by equation (4):

$$R_e(t, \Delta t) = \tau^{-1} * I_e(t) * C_e(t) \qquad (4).$$

Here, $C_e(t)$ may be a collision severity (e.g., considering a type and/or weight of the further vehicle, a velocity difference, etc., as described herein). $\tau^{-1} * I_e(t)$ may represent a collision probability. $\tau^{-1}$ may be an event rate representing a number of events that occur per unit time interval for a certain type of situations. $I_e(t)$ may be a collision indicator function representing a likelihood of a collision. The collision indicator function, $I_e(t)$, may be determined by equation (5) using Gaussian Error functions, erf:

$$I_e = \frac{1}{2}\left[\mathrm{erf}\left\{\frac{d_0 - d(t)}{\sqrt{2}\sigma(t)}\right\} + 1\right] \qquad (5).$$

Here, $d(t)$ may be the distance at time point, t; $d_0$ may be a constant reflecting a minimum distance below which a collision event is inevitable; and $\sigma(t)$ may be a distance uncertainty of the approaching traffic participant (e.g., the further vehicle) at time point, t.

According to various aspects, the distance values and/or the velocity values may be determined using motion models, such as constant acceleration. For example, the rear-facing sensors of the vehicle 100 may be configured to provide distance data associated with the further vehicle and the one or more processors 102 may be configured to determine a distance of the further vehicle using the distance data. In this example, the one or more processors 102 may employ the collision risk model (e.g., using also the motion model) to predict how the distance between the vehicle 100 and the further vehicle evolves over time, t (i.e., d(t)).

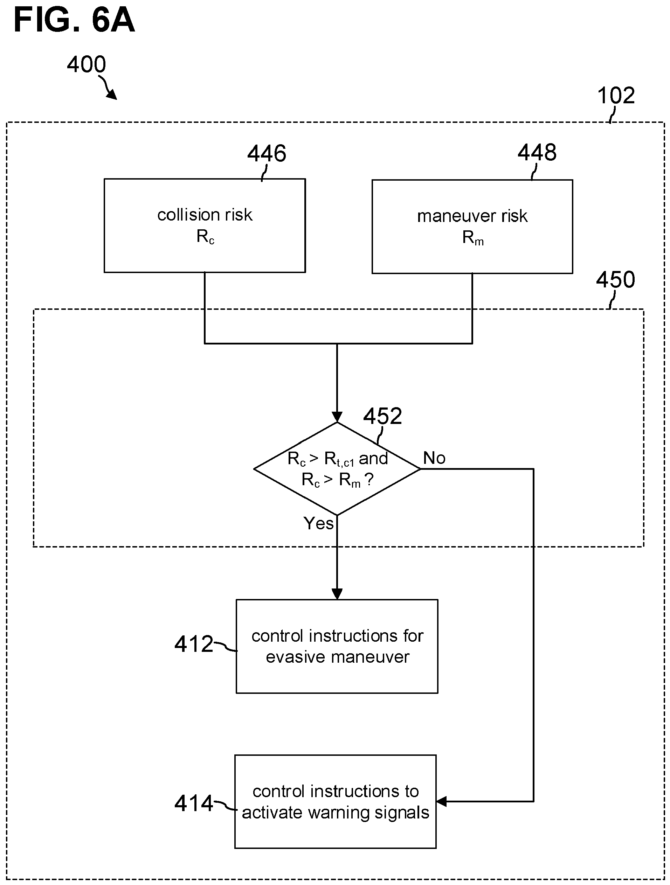

The one or more processors 102 may be configured to perform a risk analysis 450 (see, for example, FIG. 6A to FIG. 6C) using the maneuver risk value 448 and the collision risk value 446. According to various aspects, one or more processors 102 may be configured to provide the control instructions 412 to perform the evasive maneuver 410 based on the risk analysis 450.

According to various aspects, the one or more processors 102 may be configured to determine the plurality of potential evasive maneuvers 426 and may be configured to determine a respective collision risk value 446 and a respective maneuver risk value 448 for each potential evasive maneuver of the plurality of potential evasive maneuvers 426. one or more processors 102 may be configured to perform the risk analysis 450 for each potential evasive maneuver of the plurality of potential evasive maneuvers 426.

The collision risk may represent an accident severity. The collision risk may consider a type of the vehicle 100, a weight of the vehicle 100, a number of passengers in the vehicle 100, seat positions of passengers in the case that there are passengers in the vehicle 100, an expected injury of each passenger in the vehicle 100, and/or a direction from which the further vehicle approaches the vehicle 100, among others.

The risk associated with the evasive maneuver 410 may represent a risk of performing the evasive maneuver 410. The risk associated with the evasive maneuver 410 may consider a collision risk between the vehicle 100 and other traffic participants in the surrounding of the vehicle 100 (e.g., the further vehicle, e.g., the front vehicle, e.g., one or more lateral vehicles, e.g., pedestrians, e.g., cyclists, etc.), a number of passengers in the vehicle 100, seat positions of passengers in the case that there are passengers in the vehicle 100, an expected injury of each passenger in the vehicle 100, and/or the available space 424 for performing the evasive maneuver 410, among others.

FIG. 6A to FIG. 6C each show the safety system 400 performing an exemplary risk analysis 450, in accordance with various aspects of the disclosure.

With reference to FIG. 6A, the one or more processors 102 may be configured to determine 452 whether the collision risk value 446, $R_c$, is greater than a first predefined collision risk threshold value, $R_{t,c1}$, and whether the collision risk value 446, $R_c$, is greater than the maneuver risk value 448, $R_m$. According to various aspects, a collision risk value greater than the first predefined collision risk threshold value, $R_{t,c1}$, may indicate a critical collision risk. A critical collision may refer to a collision for which a high accident severity (e.g., injury severity of driver/passengers, e.g., collision consequences) is expected. Illustratively, the first predefined collision risk threshold value, $R_{t,c1}$, may be such that substantially only really critical situations lead to risk values above the first predefined collision risk threshold value, $R_{t,c1}$. For example, the first predefined collision risk threshold value, $R_{t,c1}$, may be such that collisions with a low accident severity, such as collisions with a low velocity difference between the vehicle 100 and the further vehicle in the moment of collision and/or collisions which may only damage an outer shell of the vehicle 100, do not exceed the first predefined collision risk threshold value, $R_{t,c1}$. Illustratively, this may reduce a false-positive rate of performing the evasive maneuver 410.

The one or more processors 102 may be configured to provide the control instructions 412 to control the vehicle 100 to perform the evasive maneuver 410 in the case that the collision risk value 446, $R_c$, is greater than the first predefined collision risk threshold value, $R_{t,c1}$, and that the collision risk value 446, $R_c$, is greater than the maneuver risk value 448, $R_m$ ("Yes" in 452). The one or more processors 102 may be configured to provide the control instructions 414 to control the vehicle 100 to activate one or more warning signals (e.g., at least one horn, at least one indicator (e.g., turn indicator, e.g., turn signal), at least one flash light, at least one rear light, at least one front light, and/or at least one hazard light, among others), in the case that the collision risk value 446, $R_c$, is not greater than the first predefined collision risk threshold value and/or that the collision risk value 446, $R_c$, is not greater than the maneuver risk value 448, $R_m$ ("No" in 452).

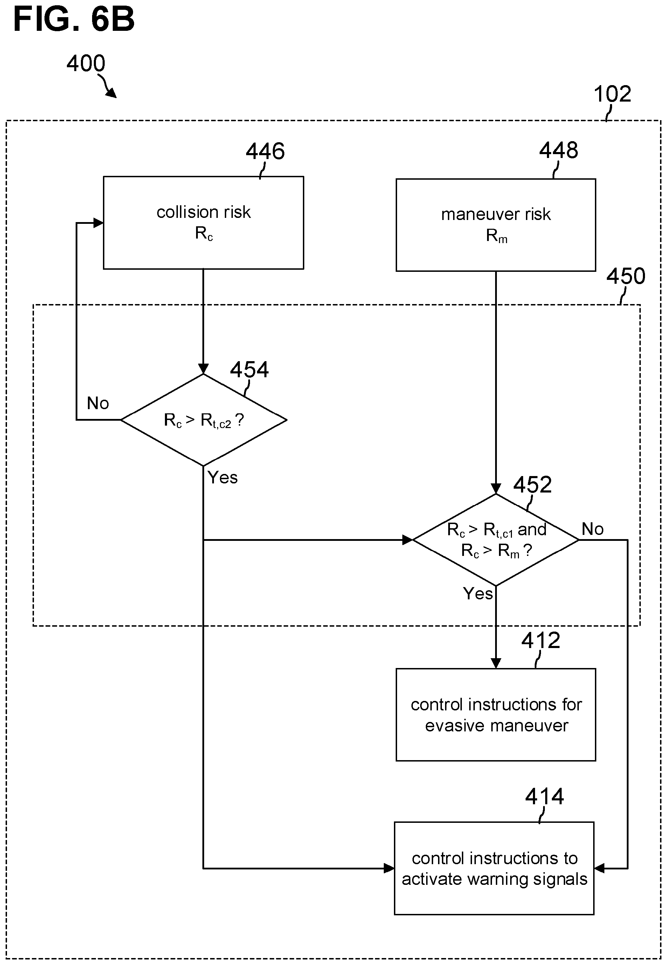

With reference to **FIG. 6B,** the one or more processors 102 may be configured to determine 454 whether the collision risk value 446, $R_c$, is greater than a second predefined collision risk threshold value, $R_{t,c2}$. The second predefined collision risk threshold value, $R_{t,c2}$, may be less than the first predefined collision risk threshold value, $R_{t,c1}$. According to various aspects, a collision risk value less than the second predefined collision risk threshold value, $R_{t,c2}$, may indicate a low collision risk. A low risk collision may refer to a collision for which a no or little accident severity (e.g., injury severity of driver/passengers) is expected. The one or more processors 102 may be configured to provide the control instructions 414 to control the vehicle 100 to activate one or more warning signals (e.g., at least one horn, at least one indicator (e.g., turn indicator, e.g., turn signal), at least one flash light, at least one rear light, at least one front light, and/or at least one hazard light, among others), in the case that the collision risk value 446, $R_c$, is greater than the second predefined collision risk threshold value, $R_{t,c2}$ ("Yes" in 454). According to various aspects, the one or more processors 102 may be configured to determine 452 whether the collision risk value 446, $R_c$, is greater than the first predefined collision risk threshold value, $R_{t,c1}$, and whether the collision risk value 446, $R_c$, is greater than the maneuver risk value 448, $R_m$, in the case that the collision risk value 446, $R_c$, is greater than the second predefined collision risk threshold value, $R_{t,c2}$ ("Yes" in 454). Illustratively, the risk analysis 450 may include the first predefined collision risk threshold value representing a critical collision risk above the first predefined collision risk threshold value and the second predefined collision risk threshold value representing a low collision risk below the second predefined collision risk threshold value. Illustratively, the vehicle 100 may activate warning signals once a collision risk is greater than the second predefined collision risk threshold value and may perform an evasive maneuver once the collision risk is greater than the first predefined collision risk threshold value.

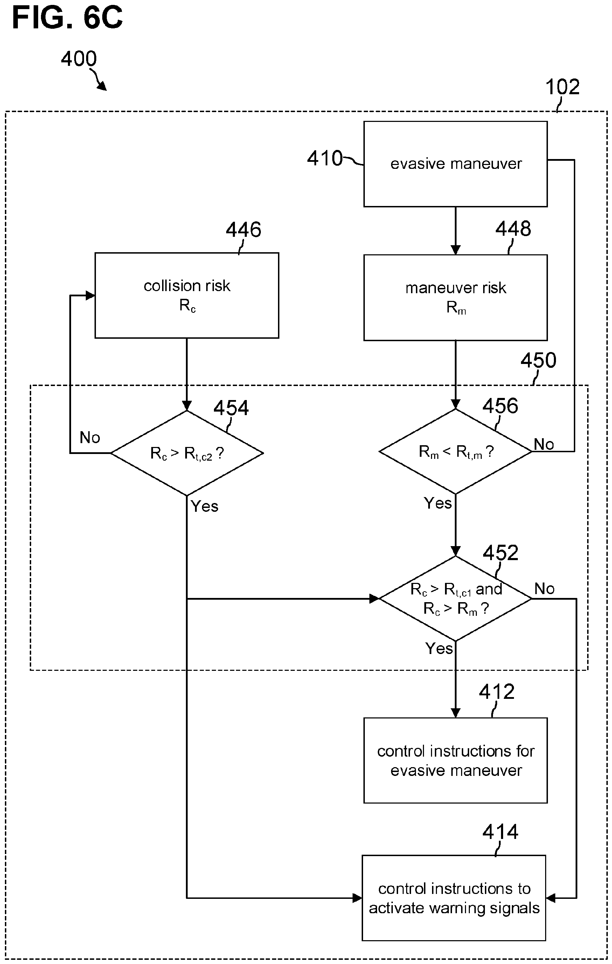

With reference to **FIG. 6C,** the one or more processors 102 may be configured to determine 456 whether the maneuver risk value 448, $R_m$, is less than a predefined maneuver risk threshold value, $R_{t,m}$. The predefined maneuver risk threshold value, $R_{t,m}$, may represent a tolerable risk associated with the evasive maneuver 410. In the case that the maneuver risk value 448, $R_m$, is not less than the predefined maneuver risk threshold value, $R_{t,m}$, the evasive maneuver 410 may not be performed ("No" in 456). The one or more processors 102 may be configured to determine 452 whether the collision risk value 446, $R_c$, is greater than the first predefined collision risk threshold value, $R_{t,c1}$, and whether the collision risk value 446, $R_c$, is greater than the maneuver risk value 448, $R_m$, in the case that the collision risk value 446, $R_c$, is greater than the second predefined collision risk threshold value, $R_{t,c2}$ ("Yes" in 454) and that the maneuver risk value 448, $R_m$, is less than the predefined maneuver risk threshold value, $R_{t,m}$ ("No" in 456). Illustratively, the vehicle 100 may perform the evasive maneuver 410 only in the case that the risk associated with the evasive maneuver 410 is acceptable low (e.g., as defined by the predefined maneuver risk threshold value, $R_{t,m}$).

According to various aspects, one or more of the threshold values described herein (the first predefined collision risk threshold value, $R_{t,c1}$, the second predefined collision risk threshold value, $R_{t,c1}$, the maneuver risk threshold value, $R_{t,m}$, the predefined distance threshold value, and/or the predefined velocity threshold value) may be manufacturer-defined threshold values.

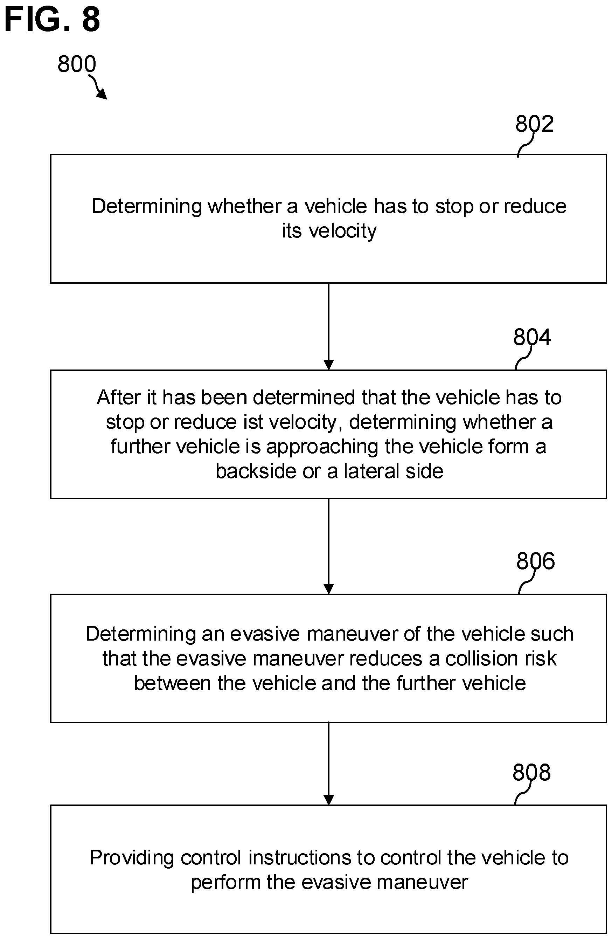

**FIG.** 8 shows a flow diagram 800 of an exemplary method of operating a safety system for a vehicle, in accordance with various aspects of the disclosure.

The method may include determining whether a vehicle has to stop or reduce its velocity (in 802).

The method may include while the vehicle is stopped or moving with reduced velocity, determining whether a further vehicle is approaching the vehicle form a backside or a lateral side (in 804).

The method may include determining an evasive maneuver of the vehicle such that the evasive maneuver reduces a collision risk between the vehicle and the further vehicle (in 806). Determining an evasive maneuver may include: determining a plurality of potential evasive maneuvers, determining a respective risk value for each of the plurality of potential evasive maneuvers, and determining the potential evasive maneuver of the plurality of potential evasive maneuvers having the lowest risk value as the evasive maneuver of the vehicle. The risk value may represent a risk associated with the respective potential evasive maneuver.

The method may include providing control instructions to control the vehicle to perform the evasive maneuver (in 808). The method may include determining a collision risk value of a collision risk between the vehicle and the further vehicle and determining a maneuver risk value, the maneuver risk value representing a risk associated with the evasive maneuver. Providing control instructions to control the vehicle to perform the evasive maneuver may include providing control instructions to control the vehicle to perform the evasive maneuver in the case that the determined collision risk value is greater than a predefined collision risk threshold value and greater than the determined maneuver risk value. The method may include in the case that the determined collision risk value is not greater than the predefined collision risk threshold value and/or not greater than the determined maneuver risk value, providing control instructions to control the vehicle to activate at least one horn, at least one indicator, at least one flash light, at least one rear light, at least one front light, and/or at least one hazard light, among others.

In the following, various aspects of the present disclosure will be illustrated:

Example 1 is a safety system including a processor, the processor configured to determine whether a further vehicle is approaching the vehicle from a backside or a lateral side; determine that a collision of the further vehicle with the vehicle is likely; determine an evasive maneuver of the vehicle such that the evasive maneuver reduces the collision likelihood or impact between the vehicle and the further vehicle; and provide control instructions to control the vehicle to perform the evasive maneuver.

In Example 2, the subject matter of Example 1 can optionally include that the processor is configured to: determine whether the vehicle has to stop or reduce its velocity.

In Example 3, the subject matter of Example 1 or 2 can optionally include that the processor is configured to use at least one sensor of the vehicle operating in the backside or lateral side of the vehicle to determine whether a further vehicle is approaching the vehicle from the backside or lateral side.

In Example 4, the subject matter of any one of Examples 1 to 3 can optionally include that the processor is configured to: determine whether a collision is likely based on velocity or other physical characteristics of the further vehicle.

Example 5, the subject matter of any one of Examples 1 to 4 can optionally include that the processor is configured to: determine that a collision of the further vehicle with the vehicle is likely after the vehicle has stopped or reduced its velocity.

In Example 6, the subject matter of any one of Examples 1 to 5 can optionally include that the processor is configured to: determine whether the further vehicle is approaching the vehicle from the backside or lateral side in a predetermined time after it has been determined that the vehicle has to stop or reduce its velocity.

In Example 7, the subject matter of any one of Examples 1 to 6 can optionally include that the processor is configured to: determine whether the further vehicle is approaching the vehicle from the backside or lateral side while the vehicle is reducing its velocity to stop.

In Example 8, the subject matter of any one of Examples 1 to 7 can optionally include that the processor is configured to: determine whether the further vehicle is approaching the vehicle from the backside or lateral side while the vehicle is stopped.

In Example 9, the subject matter of any one of Examples 1 to 8 can optionally include that the processor is configured to: determine whether the further vehicle is approaching the vehicle from the backside or lateral side while the vehicle is moving with reduced velocity.

In Example 10, the subject matter of any one of Examples 1 to 9 can optionally include that the processor is configured to: determine a stopping situation in a driving direction of the vehicle; and determine that the vehicle has to stop or reduce its velocity approaching the stopping situation.

In Example 11, the subject matter of Example 10 can optionally include that the processor is further configured to: determine a stopping distance of the vehicle such that a minimum distance between the stopped or slowed down vehicle and the stopping situation is equal to or greater than a predefined distance threshold value; and provide control instructions to control the vehicle to inform a driver of the vehicle to stop or slow down in accordance with the determined stopping distance or provide control instructions to control the vehicle to stop or reduce its velocity in accordance with the determined stopping distance.

In Example 12, the subject matter of any one of Examples 1 to 11 can optionally include that the processor is configured to determine the collision likelihood or impact between the vehicle and the further vehicle.

In Example 13, the subject matter of any one of Examples 1 to 12 can optionally include that the processor is configured to, in the case that the further vehicle is approaching the vehicle from a backside or a lateral side, provide control instructions to control the vehicle to activate an aural, a visual, or an audio-visual warning signal indicating the collision risk to other traffic participants.

In Example 14, the subject matter of Example 13 can optionally include that the warning signal includes at least one of: a horn, an indicator, a flash light, a rear light, a front light, a hazard light.

In Example 15, the subject matter of Example 13 or 14 can optionally include that the control instructions to control the vehicle to perform the evasive maneuver include: control instructions to control the vehicle to inform a driver of the vehicle to perform the evasive maneuver in the case that the vehicle is a human-operated vehicle; or control instructions to control the vehicle to automatically perform the evasive maneuver in the case that the vehicle is an autonomous vehicle.

In Example 16, the subject matter of any one of Examples 1 to 15 can optionally include that the control instructions to control the vehicle to perform the evasive maneuver include control instructions to control the vehicle to accelerate and/or steer and perform the evasive maneuver.

In Example 17, the subject matter of any one of Examples 1 to 16 can optionally include that the processor is configured to provide control instructions to control the vehicle to transmit collision information to the further vehicle via a communication channel between the vehicle and the further vehicle, the collision information including at least one of: the collision risk between the vehicle and the further vehicle, the evasive maneuver to be performed, a number and/or seat positions of passengers in the vehicle.

In Example 18, the subject matter of any one of Examples 1 to 17 can optionally include that the processor is configured to determine the evasive maneuver of the vehicle using collision avoidance information provided by the further vehicle via a communication channel between the vehicle and the further vehicle, the collision avoidance information representing a collision avoidance maneuver to be performed by the further vehicle.

In Example 19, the subject matter of any one of Examples 1 to 18 can optionally include that the processor is configured to provide control instructions to control the vehicle to prepare for a collision between the vehicle and the further vehicle using at least one of: aural and/or visual information to warn a driver of the vehicle, an airbag, a position of a seat in the vehicle, a seat belt pretensioner.

In Example 20, the subject matter of any one of Examples 1 to 19 can optionally include that the processor is configured to determine a space for potential evasive maneuvers of the vehicle; and determine the evasive maneuver of the vehicle using the space for potential evasive maneuvers.

In Example 21, the subject matter of Example 20 can optionally include that the processor is configured to determine road information indicating whether the vehicle is driving on a highway, a motorway, a road with multiple lanes in driving direction of the vehicle, a road with a hard shoulder, and/or a road with a road verge; and determine the evasive maneuver of the vehicle using the space for potential evasive maneuvers and the road information.

In Example 22, the subject matter of any one of Examples 1 to 21 can optionally include that the processor is configured to determine a maneuver risk value, the maneuver risk value representing a risk associated with the evasive maneuver; and provide the control instructions to control the vehicle to perform the evasive maneuver in the case that the determined maneuver risk value is less than a predefined maneuver risk threshold value.

In Example 23, the subject matter of any one of Examples 1 to 22 can optionally include that the processor is configured to determine a collision risk value of a collision risk (e.g., the collision likelihood and/or impact) between the vehicle and the further vehicle; and provide the control instructions to control the vehicle to perform the evasive maneuver in the case that the determined collision risk value is greater than a predefined collision risk threshold value.

In Example 24, the subject matter of any one of Examples 1 to 22 can optionally include that the processor is configured to determine a collision risk value representing the collision likelihood and/or impact between the vehicle and the further vehicle; and provide the control instructions to control the vehicle to perform the evasive maneuver in the case that the determined collision risk value is greater than a predefined collision risk threshold value.

In Example 25, the subject matter of any one of Examples 22 to 24 can optionally include that the processor is configured to provide the control instructions to control the vehicle to perform the evasive maneuver in the case that the determined maneuver risk value is less than the predefined maneuver risk threshold value and that the determined collision risk value is greater than the predefined collision risk threshold value and greater than the determined maneuver risk value.

In Example 26, the subject matter of any one of Examples 22 to 24 can optionally include that the processor is configured to provide the control instructions to control the vehicle to perform the evasive maneuver in the case that the determined collision risk value is greater than the predefined collision risk threshold value and greater than the determined maneuver risk value.

In Example 27, the subject matter of any one of Examples 1 to 26 can optionally include that the processor is configured to determine a driving situation of the vehicle using sensor data provided by a sensor for perceiving a surrounding of the vehicle, the sensor data representing the surrounding of the vehicle.

In Example 28, the subject matter of Example 27 can optionally include that the processor is configured to determine whether the vehicle has to stop or reduce its velocity using the determined driving situation of the vehicle.

In Example 29, the subject matter of Example 27 or 28 can optionally include that the processor is configured to determine whether the further vehicle is approaching the vehicle from the backside or a lateral side using the determined driving situation of the vehicle.

In Example 30, the subject matter of any one of Examples 1 to 29 can optionally include that the processor is configured to determine the evasive maneuvers using the at least one of: a length of the vehicle, a maximum acceleration of the vehicle, a turning radius of the vehicle.

In Example 31, the subject matter of any one of Examples 1 to 30 can optionally include that the vehicle is an autonomous vehicle.

In Example 32, the subject matter of any one of Examples 1 to 31 can optionally include that the processor is configured to determine whether there are passengers in the autonomous vehicle; determine whether there are passengers in the further vehicle using information provided by the further vehicle via a communication channel between the vehicle and the further vehicle; in the case that there are passengers in the further vehicle, determine a protective maneuver such that the protective maneuver reduces an expected injury of each of the passengers in the further vehicle; and in the case that there are no passengers in the autonomous vehicle and that there are passengers in the further vehicle, provide control instructions to control the autonomous vehicle to perform the protective maneuver.

In Example 33, the subject matter of any one of Examples 1 to 32 can optionally include that the processor is configured to determine a plurality of potential evasive maneuvers; determine a respective risk value for each of the plurality of potential evasive maneuvers, the risk value representing a risk associated with the respective potential evasive maneuver; determine the potential evasive maneuver of the plurality of potential evasive maneuvers having the lowest risk value as the evasive maneuver of the vehicle.

In Example 34, the subject matter of any one of Examples 1 to 33 can optionally include that the processor is configured to determine a collision risk value of a collision risk between the vehicle and the further vehicle; determine a maneuver risk value, the maneuver risk value representing a risk associated with the evasive maneuver; and provide the control instructions to control the vehicle to perform the evasive maneuver in the case that the determined collision risk value is greater than a predefined collision risk threshold value and greater than the determined maneuver risk value.

In Example 35, the subject matter of Example 34 can optionally include that the processor is configured to, in the case that the determined collision risk value is not greater than the predefined collision risk threshold value and/or not greater than the determined maneuver risk value, provide control instructions to control the vehicle to activate an aural, a visual, or an audio-visual warning signal indicating the collision risk to other traffic participants.

In Example 36, the subject matter of Example 35 can optionally include that the warning signal includes at least one of: a horn, an indicator, a flash light, a rear light, a front light, a hazard light.

In Example 37, the subject matter of Example 34 can optionally include that the predefined collision risk threshold value is a first predefined collision risk threshold value and that the processor is configured to, in the case that the determined collision risk value is greater than a second predefined collision risk threshold value, provide control instructions to control the vehicle to activate an aural, a visual, or an audio-visual warning signal indicating the collision risk to other traffic participants. The second predefined collision risk threshold value may be less than the first predefined collision risk threshold value.

In Example 38, the subject matter of Example 37 can optionally include that the warning signal includes at least one of: a horn, an indicator, a flash light, a rear light, a front light, a hazard light.

In Example 39, the subject matter of any one of Examples 1 to 38 can optionally include that the processor is configured to determine a collision risk value of a collision risk between the vehicle and the further vehicle; determine a maneuver risk value, the maneuver risk value representing a risk associated with the evasive maneuver; and provide the control instructions to control the vehicle to perform the evasive maneuver in the case that the determined maneuver risk value is less than a predefined maneuver risk threshold value and that the determined collision risk value is greater than a predefined collision risk threshold value and greater than the determined maneuver risk value.

In Example 40, the subject matter of Example 39 can optionally include that the processor is configured to, in the case that the determined maneuver risk value is not less than the predefined maneuver risk threshold value, and/or that the determined collision risk value is not greater than the predefined collision risk threshold value and/or not greater than the determined maneuver risk value, provide control instructions to control the vehicle to activate an aural, a visual, or an audio-visual warning signal indicating the collision risk to other traffic participants.

In Example 41, the subject matter of Example 40 can optionally include that the warning signal includes at least one of: a horn, an indicator, a flash light, a rear light, a front light, a hazard light.

In Example 42, the subject matter of Example 40 can optionally include that the predefined collision risk threshold value is a first predefined collision risk threshold value and that the processor is configured to, in the case that the determined collision risk value is greater than a second predefined collision risk threshold value, provide control instructions to control the vehicle to activate an aural, a visual, or an audio-visual warning signal indicating the collision risk to other traffic participants. The second predefined collision risk threshold value may be less than the first predefined collision risk threshold value.

In Example 43, the subject matter of Example 42 can optionally include that the warning signal includes at least one of: a horn, an indicator, a flash light, a rear light, a front light, a hazard light.

In Example 44, the subject matter of any one of Examples 34 to 43 can optionally include that the risk associated with the evasive maneuver represents a risk of performing the evasive maneuver and considers at least one of: a collision risk between the vehicle and other traffic participants in a surrounding of the vehicle, a number and/or seat positions of passengers in the vehicle, an expected injury of each passenger in the vehicle, an available space for performing the evasive maneuver.

In Example 45, the subject matter of any one of Examples 1 to 44 can optionally include that the collision risk represents an accident severity considering at least one of: a type of the vehicle, a weight of the vehicle, a number and/or seat positions of passengers in the vehicle, an expected injury of each passenger in the vehicle, a direction from which the further vehicle approaches the vehicle.

In Example 46, the subject matter of any one of Examples 1 to 45 can optionally include that the processor is configured to determine whether a velocity of a yet further vehicle in front of the vehicle with respect to a driving direction of the vehicle is less than a predefined velocity threshold value; determine that the vehicle has to stop or reduce its velocity in the case that the velocity of the yet further vehicle is less than the predefined velocity threshold value; determine a stopping distance of the vehicle such that a minimum distance between the stopped or slowed down vehicle and the yet further vehicle is equal to or greater than a predefined distance threshold value; and provide control instructions to control the vehicle to inform a driver of the vehicle to stop or slow down in accordance with the determined stopping distance.

In Example 47, the subject matter of any one of Examples 1 to 45 can optionally include that the processor is configured to determine whether a velocity of a yet further vehicle in front of the vehicle with respect to a driving direction of the vehicle is less than a predefined velocity threshold value; determine that the vehicle has to stop or reduce its velocity in the case that the velocity of the yet further vehicle is less than the predefined velocity threshold value; determine a stopping distance of the vehicle such that a minimum distance between the stopped or slowed down vehicle and the yet further vehicle is equal to or greater than a predefined distance threshold value; and provide control instructions to control the vehicle to stop or reduce its velocity in accordance with the determined stopping distance.

In Example 48, the subject matter of Example 47 can optionally include that the processor is configured to determine whether the vehicle can stop within the stopping distance using a maximum braking intensity; and provide control instructions to control the vehicle to stop using the maximum braking intensity in the case that the vehicle cannot stop within the stopping distance using the maximum braking intensity.

In Example 49, the subject matter of Example 47 or 48 can optionally include that the vehicle is an autonomous vehicle and that the processor is configured to determine whether there are passengers in the autonomous vehicle; and provide the control instructions to control the autonomous vehicle to perform the evasive maneuver in the case that there are passengers in the autonomous vehicle.

In Example 50, the subject matter of Example 49 can optionally include that the processor is configured to provide control instructions to control the autonomous vehicle to not perform the evasive maneuver in the case that there are no passengers in the autonomous vehicle.

In Example 51, the subject matter of Example 49 or 50 can optionally include that the processor is configured to determine whether there are passengers in the yet further vehicle; determine a protective maneuver such that the protective maneuver reduces a collision risk between the further vehicle and the yet further vehicle; and in the case that there are no passengers in the autonomous vehicle and that there are passengers in the yet further vehicle, provide control instructions to control the autonomous vehicle to perform the protective maneuver.

In Example 52, the subject matter of Example 51 can optionally include that the processor is configured to determine whether there are passengers in the yet further vehicle: using information provided by the yet further vehicle via a communication channel between the vehicle and the yet further vehicle; and/or using sensor data provided by a sensor for perceiving a surrounding of the vehicle.

In Example 53, the subject matter of any one of Examples 46 to 52 can optionally include that the processor is configured to determine the predefined distance threshold value using a length of the vehicle and/or a turning radius of the vehicle.

In Example 54, the subject matter of any one of Examples 46 to 53 can optionally include that the processor is configured to provide control instructions to control the vehicle to transmit collision information to the yet further vehicle via a communication channel between the vehicle and the yet further vehicle, the collision information including at least one of: the collision risk between the vehicle and the further vehicle, a collision risk between the vehicle and the yet further vehicle resulting from the collision risk between the vehicle and the further vehicle, the evasive maneuver to be performed, a number and/or seat positions of passengers in the vehicle.

In Example 55, the subject matter of any one of Examples 46 to 54 can optionally include that the processor is configured to determine the evasive maneuver of the vehicle using information of the yet further vehicle provided by the yet further vehicle via a communication channel between the vehicle and the yet further vehicle, the information of the yet further vehicle including at least one of: a type of the yet further vehicle, a weight of the yet further vehicle, a number and/or seat positions of passengers in the yet further vehicle.

Example 56 is a safety system including a processor, the processor configured to determine whether the vehicle has to stop or reduce its velocity; after it has been determined that the vehicle has to stop or reduce its velocity, determine whether a further vehicle is approaching the vehicle from a backside or a lateral side; determine an evasive maneuver of the vehicle such that the evasive maneuver reduces a collision risk between the vehicle and the further vehicle; and provide control instructions to control the vehicle to perform the evasive maneuver.

Example 57 is a vehicle including a safety system according to any one of Examples 1 to 56 and a control system configured to control the vehicle in accordance with control instructions provided by the safety system.

In Example 58, the subject matter of Example 57 can optionally include that the vehicle further includes a sensor for perceiving a surrounding of the vehicle, the sensor configured to provide sensor data representing the surrounding of the vehicle; and that the processor of the safety system is configured to use the provided sensor to determine: whether the vehicle has to stop or reduce its velocity, whether the further vehicle is approaching the vehicle from the backside or a lateral side, and/or the evasive maneuver.

In Example 59, the subject matter of Example 58 can optionally include that the sensor includes a light detection and ranging (LIDAR) sensor, a radar sensor, an ultrasonic sensor, or a camera.

In Example 60, the subject matter of any one of Examples 57 to 59 can optionally include that the vehicle is an autonomous vehicle.

Example 61 is a vehicle including a safety system including a processor, the processor configured to: determine whether the vehicle has to stop or reduce its velocity; after it has been determined that the vehicle has to stop or reduce its velocity, determine whether a further vehicle is approaching the vehicle from a backside or a lateral side; determine an evasive maneuver of the vehicle such that the evasive maneuver reduces a collision risk between the vehicle and the further vehicle; provide control instructions to control the vehicle to perform the evasive maneuver. The vehicle further includes a control system configured to control the vehicle in accordance with control instructions provided by the one or more processors of the safety system.

In Example 62, the subject matter of Example 61 can optionally include that the processor of the safety system is configured to: determine whether the further vehicle is approaching the vehicle from the backside or lateral side in a predetermined time after it has been determined that the vehicle has to stop or reduce its velocity.

In Example 63, the subject matter of Example 61 or 62 can optionally include that the processor of the safety system is configured to: determine whether the further vehicle is approaching the vehicle from the backside or lateral side while the vehicle is reducing its velocity to stop.

In Example 64, the subject matter of any one of Examples 61 to 63 can optionally include that the processor of the safety system is configured to: determine whether the further vehicle is approaching the vehicle from the backside or lateral side while the vehicle is stopped.

In Example 65, the subject matter of any one of Examples 61 to 64 can optionally include that the processor of the safety system is configured to: determine whether the further vehicle is approaching the vehicle from the backside or lateral side while the vehicle is moving with reduced velocity.

Example 66 is a vehicle including a safety system including a processor, the processor configured to: determine whether a further vehicle is approaching the vehicle from a backside or a lateral side; determine that a collision of the further vehicle with the vehicle is likely; determine an evasive maneuver of the vehicle such that the evasive maneuver reduces the collision likelihood or impact between the vehicle and the further vehicle; and provide control instructions to control the vehicle to perform the evasive maneuver. The vehicle further includes a control system configured to control the vehicle in accordance with control instructions provided by the one or more processors of the safety system.

In Example 67, the subject matter of Example 66 can optionally include that the processor is configured to: determine whether the vehicle has to stop or reduce its velocity.

In Example 68, the subject matter of Example 66 or 67 can optionally include that the processor is configured to use at least one sensor of the vehicle operating in the backside or lateral side of the vehicle to determine whether a further vehicle is approaching the vehicle from the backside or lateral side.

In Example 69, the subject matter of any one of Examples 66 to 68 can optionally include that the processor is configured to: determine whether a collision is likely based on velocity or other physical characteristics of the further vehicle.

Example 70, the subject matter of any one of Examples 66 to 69 can optionally include that the processor is configured to: determine that a collision of the further vehicle with the vehicle is likely after the vehicle has stopped or reduced its velocity.

In Example 71, the subject matter of any one of Examples 66 to 70 can optionally include that the processor of the safety system is configured to: determine whether the further vehicle is approaching the vehicle from the backside or lateral side in a predetermined time after it has been determined that the vehicle has to stop or reduce its velocity.

In Example 72, the subject matter of any one of Examples 66 to 71 can optionally include that the processor of the safety system is configured to: determine whether the further vehicle is approaching the vehicle from the backside or lateral side while the vehicle is reducing its velocity to stop.

In Example 73, the subject matter of any one of Examples 66 to 72 can optionally include that the processor of the safety system is configured to: determine whether the further vehicle is approaching the vehicle from the backside or lateral side while the vehicle is stopped.

In Example 74, the subject matter of any one of Examples 66 to 73 can optionally include that the processor of the safety system is configured to: determine whether the further vehicle is approaching the vehicle from the backside or lateral side while the vehicle is moving with the reduced velocity.

Example 75 is a computer program element including instructions which, when executed by a processor of a vehicle, cause the processor to: determine whether the vehicle has to stop or reduce its velocity; after it has been determined that the vehicle has to stop or reduce its velocity, determine whether a further vehicle is approaching the vehicle from a backside or a lateral side; determine an evasive maneuver of the vehicle such that the evasive maneuver reduces a collision risk between the vehicle and the further vehicle; and provide control instructions to control the vehicle to perform the evasive maneuver.

In Example 76, the subject matter of Example 75 can optionally include that the instructions, when executed by the processor of the vehicle, cause the processor to: determine whether the further vehicle is approaching the vehicle from the backside or lateral side in a predetermined time after it has been determined that the vehicle has to stop or reduce its velocity.

In Example 77, the subject matter of Example 75 or 76 can optionally include that the instructions, when executed by the processor of the vehicle, cause the processor to: determine whether the further vehicle is approaching the vehicle from the backside or lateral side while the vehicle is reducing its velocity to stop.

In Example 78, the subject matter of any one of Examples 75 to 77 can optionally include that the instructions, when executed by the processor of the vehicle, cause the processor to: determine whether the further vehicle is approaching the vehicle from the backside or lateral side while the vehicle is stopped.

In Example 79, the subject matter of any one of Examples 75 to 78 can optionally include that the instructions, when executed by the processor of the vehicle, cause the processor to: determine whether the further vehicle is approaching the vehicle from the backside or lateral side while the vehicle is moving with the reduced velocity.

Example 80 is a non-transitory computer-readable medium having instructions recorded thereon which, when executed by a processor of a vehicle, cause the processor to: determine whether the vehicle has to stop or reduce its velocity; after it has been determined that the vehicle has to stop or reduce its velocity, determine whether a further vehicle is approaching the vehicle from a backside or a lateral side; determine an evasive maneuver of the vehicle such that the evasive maneuver reduces a collision risk between the vehicle and the further vehicle; and provide control instructions to control the vehicle to perform the evasive maneuver.

In Example 81, the subject matter of Example 80 can optionally include that the instructions, when executed by the processor of the vehicle, cause the processor to: determine whether the further vehicle is approaching the vehicle from the backside or lateral side in a predetermined time after it has been determined that the vehicle has to stop or reduce its velocity.

In Example 82, the subject matter of Example 80 or 81 can optionally include that the instructions, when executed by the processor of the vehicle, cause the processor to: determine whether the further vehicle is approaching the vehicle from the backside or lateral side while the vehicle is reducing its velocity to stop.

In Example 83, the subject matter of any one of Examples 80 to 82 can optionally include that the instructions, when executed by the processor of the vehicle, cause the processor to: determine whether the further vehicle is approaching the vehicle from the backside or lateral side while the vehicle is stopped.

In Example 84, the subject matter of any one of Examples 80 to 83 can optionally include that the instructions, when executed by the processor of the vehicle, cause the processor to: determine whether the further vehicle is approaching the vehicle from the backside or lateral side while the vehicle is moving with the reduced velocity.

Example 85 is a method including: determining whether a vehicle has to stop or reduce its velocity; after determing that the vehicle has to stop or reduce its velocity, determining whether a further vehicle is approaching the vehicle from a backside or a lateral side; determining an evasive maneuver of the vehicle such that the evasive maneuver reduces a collision risk between the vehicle and the further vehicle; providing control instructions to control the vehicle to perform the evasive maneuver.

In Example 86, the subject matter of Example 85 can optionally include that determining whether the further vehicle is approaching the vehicle from the backside or lateral side includes determining whether the further vehicle is approaching the vehicle from the backside or lateral side in a predetermined time after determining that the vehicle has to stop or reduce its velocity.

In Example 87, the subject matter of Example 85 or 86 can optionally include that determining whether the further vehicle is approaching the vehicle from the backside or lateral side includes determining whether the further vehicle is approaching the vehicle from the backside or lateral side while the vehicle is reducing its velocity to stop.

In Example 88, the subject matter of any one of Examples 85 to 87 can optionally include that determining whether the further vehicle is approaching the vehicle from the backside or lateral side includes determining whether the further vehicle is approaching the vehicle from the backside or lateral side while the vehicle is stopped.

In Example 89, the subject matter of any one of Examples 85 to 88 can optionally include that determining whether the further vehicle is approaching the vehicle from the backside or lateral side includes determining whether the further vehicle is approaching the vehicle from the backside or lateral side while the vehicle is moving with the reduced velocity.

In Example 90, the subject matter of any one of Examples 85 to 89 can optionally include that determining an evasive maneuver of the vehicle includes: determining a plurality of potential evasive maneuvers; determining a respective risk value for each of the plurality of potential evasive maneuvers, the risk value representing a risk associated with the respective potential evasive maneuver; and determining the potential evasive maneuver of the plurality of potential evasive maneuvers having the lowest risk value as the evasive maneuver of the vehicle.

In Example 91, the subject matter of any one of Examples 85 to 90 can optionally include that the method further includes determining a collision risk value of a collision risk between the vehicle and the further vehicle and determining a maneuver risk value, the maneuver risk value representing a risk associated with the evasive maneuver; and that providing control instructions to control the vehicle to perform the evasive maneuver includes providing the control instructions to control the vehicle to perform the evasive maneuver in the case that the determined collision risk value is greater than a predefined collision risk threshold value and greater than the determined maneuver risk value.

In Example 92, the subject matter of Example 91 can optionally include that the method further includes: in the case that the determined collision risk value is not greater than the predefined collision risk threshold value and/or not greater than the determined maneuver risk value, providing control instructions to control the vehicle to activate an aural, a visual, or an audio-visual warning signal indicating the collision risk to other traffic participants.

In Example 93, the subject matter of Example 92 can optionally include that the warning signal includes at least one of: a horn, an indicator, a flash light, a rear light, a front light, a hazard light.

In Example 94, the subject matter of Example 91 can optionally include that the predefined collision risk threshold value is a first predefined collision risk threshold value and that the method further includes: in the case that the determined collision risk value is greater than a second predefined collision risk threshold value, providing control instructions to control the vehicle to activate an aural, a visual, or an audio-visual warning signal indicating the collision risk to other traffic participants. The the second predefined collision risk threshold value may be less than the first predefined collision risk threshold value.

In Example 95, the subject matter of Example 94 can optionally include that the warning signal includes at least one of: a horn, an indicator, a flash light, a rear light, a front light, a hazard light.

In Example 96, the subject matter of any one of Examples 85 to 95 can optionally include that the method further includes determining a collision risk value of a collision risk between the vehicle and the further vehicle and determining a maneuver risk value, the maneuver risk value representing a risk associated with the evasive maneuver; and that providing control instructions to control the vehicle to perform the evasive maneuver includes providing the control instructions to control the vehicle to perform the evasive maneuver in the case that the determined maneuver risk value is less than a predefined maneuver risk threshold value and that the determined collision risk value is greater than a predefined collision risk threshold value and greater than the determined maneuver risk value.

In Example 97, the subject matter of Example 96 can optionally include that the method further includes: in the case that the determined collision risk value is not greater than the predefined collision risk threshold value and/or not greater than the determined maneuver risk value, providing control instructions to control the vehicle to activate an aural, a visual, or an audio-visual warning signal indicating the collision risk to other traffic participants.

In Example 98, the subject matter of Example 97 can optionally include that the warning signal includes at least one of: a horn, an indicator, a flash light, a rear light, a front light, a hazard light.

In Example 99, the subject matter of Example 97 or 98 can optionally include that the predefined collision risk threshold value is a first predefined collision risk threshold value and that the method further includes: in the case that the determined collision risk value is greater than a second predefined collision risk threshold value, providing control instructions to control the vehicle to activate an aural, a visual, or an audio-visual warning signal indicating the collision risk to other traffic participants. The second predefined collision risk threshold value may be less than the first predefined collision risk threshold value.

In Example 100, the subject matter of Example 99 can optionally include that the warning signal includes at least one of: a horn, an indicator, a flash light, a rear light, a front light, a hazard light.

Example 101 is a safety system including: means for determining whether a vehicle has to stop or reduce its velocity; means for determining whether a further vehicle is approaching the vehicle from a backside or a lateral side after it has been determined that the vehicle has to stop or reduce its velocity; means for determining an evasive maneuver of the vehicle such that the evasive maneuver reduces a collision risk between the vehicle and the further vehicle; and means for providing control instructions to control the vehicle to perform the evasive maneuver.

In Example 102, the subject matter of Example 101 can optionally include that the means for determining whether a further vehicle is approaching the vehicle from a backside or a lateral side after it has been determined that the vehicle has to stop or reduce its velocity are configured to determine whether a further vehicle is approaching the vehicle from a backside or a lateral side in a predetermined time after it has been determined that the vehicle has to stop or reduce its velocity.

In Example 103, the subject matter of Example 101 or 102 can optionally include that the means for determining whether a further vehicle is approaching the vehicle from a backside or a lateral side after it has been determined that the vehicle has to stop or reduce its velocity are configured to determine whether a further vehicle is approaching the vehicle from a backside or a lateral side while the vehicle is reducing its velocity to stop.

In Example 104, the subject matter of any one of Examples 101 to 103 can optionally include that the means for determining whether a further vehicle is approaching the vehicle from a backside or a lateral side after it has been determined that the vehicle has to stop or reduce its velocity are configured to determine whether a further vehicle is approaching the vehicle from a backside or a lateral side while the vehicle is stopped.

In Example 105, the subject matter of any one of Examples 101 to 104 can optionally include that the means for determining whether a further vehicle is approaching the vehicle from a backside or a lateral side after it has been determined that the vehicle has to stop or reduce its velocity are configured to determine whether a further vehicle is approaching the vehicle from a backside or a lateral side while the vehicle is moving with the reduced velocity.

Example 106 is a vehicle including the safety system according to any one of Examples 101 to 105 and means for controlling the vehicle in accordance with control instructions provided by the safety system.

Example 106 is a computer program element including instructions which, when executed by a processor of a vehicle, cause the processor to: determine whether a further vehicle is approaching the vehicle from a backside or a lateral side; determine that a collision of the further vehicle with the vehicle is likely; determine an evasive maneuver of the vehicle such that the evasive maneuver reduces the collision likelihood or impact between the vehicle and the further vehicle; and provide control instructions to control the vehicle to perform the evasive maneuver.

In Example 107, the subject matter of Example 106 can optionally include that the instructions, when executed by the processor of the vehicle, cause the processor to: determine whether the vehicle has to stop or reduce its velocity.

In Example 108, the subject matter of Example 106 or 107 can optionally include that the instructions, when executed by the processor of the vehicle, cause the processor to: use at least one sensor of the vehicle operating in the backside or lateral side of the vehicle to determine whether a further vehicle is approaching the vehicle from the backside or lateral side.

In Example 109, the subject matter of any one of Examples 106 to 108 can optionally include that the instructions, when executed by the processor of the vehicle, cause the processor to: determine whether a collision is likely based on velocity or other physical characteristics of the further vehicle.

Example 110, the subject matter of any one of Examples 106 to 109 can optionally include that the instructions, when executed by the processor of the vehicle, cause the processor to: determine that a collision of the further vehicle with the vehicle is likely after the vehicle has stopped or reduced its velocity.

In Example 111, the subject matter of any one of Examples 106 to 110 can optionally include that the instructions, when executed by the processor of the vehicle, cause the processor to: determine whether the further vehicle is approaching the vehicle from the backside or lateral side in a predetermined time after it has been determined that the vehicle has to stop or reduce its velocity.

In Example 112, the subject matter of any one of Examples 106 to 111 can optionally include that the instructions, when executed by the processor of the vehicle, cause the processor to: determine whether the further vehicle is approaching the vehicle from the backside or lateral side while the vehicle is reducing its velocity to stop.

In Example 113, the subject matter of any one of Examples 106 to 112 can optionally include that the instructions, when executed by the processor of the vehicle, cause the processor to: determine whether the further vehicle is approaching the vehicle from the backside or lateral side while the vehicle is stopped.

In Example 114, the subject matter of any one of Examples 106 to 113 can optionally include that the instructions, when executed by the processor of the vehicle, cause the processor to: determine whether the further vehicle is approaching the vehicle from the backside or lateral side while the vehicle is moving with reduced velocity.

Example 115 is a non-transitory computer-readable medium having instructions recorded thereon which, when executed by a processor of a vehicle, cause the processor to: determine whether a further vehicle is approaching the vehicle from a backside or a lateral side; determine that a collision of the further vehicle with the vehicle is likely; determine an evasive maneuver of the vehicle such that the evasive maneuver reduces the collision likelihood or impact between the vehicle and the further vehicle; and provide control instructions to control the vehicle to perform the evasive maneuver.

In Example 116, the subject matter of Example 115 can optionally include that the instructions, when executed by the processor of the vehicle, cause the processor to: determine whether the vehicle has to stop or reduce its velocity.

In Example 117, the subject matter of Example 115 or 116 can optionally include that the instructions, when executed by the processor of the vehicle, cause the processor to: use at least one sensor of the vehicle operating in the backside or lateral side of the vehicle to determine whether a further vehicle is approaching the vehicle from the backside or lateral side.

In Example 118, the subj ect matter of any one of Examples 115 to 117 can optionally include that the instructions, when executed by the processor of the vehicle, cause the processor to: determine whether a collision is likely based on velocity or other physical characteristics of the further vehicle.

Example 119, the subject matter of any one of Examples 115 to 118 can optionally include that the instructions, when executed by the processor of the vehicle, cause the processor to: determine that a collision of the further vehicle with the vehicle is likely after the vehicle has stopped or reduced its velocity.

In Example 120, the subject matter of Example 119 can optionally include that the instructions, when executed by the processor of the vehicle, cause the processor to: determine whether the further vehicle is approaching the vehicle from the backside or lateral side in a predetermined time after it has been determined that the vehicle has to stop or reduce its velocity.

In Example 121, the subject matter of Example 119 or 120 can optionally include that the instructions, when executed by the processor of the vehicle, cause the processor to: determine whether the further vehicle is approaching the vehicle from the backside or lateral side while the vehicle is reducing its velocity to stop.

In Example 122, the subject matter of any one of Examples 119 to 121 can optionally include that the instructions, when executed by the processor of the vehicle, cause the processor to: determine whether the further vehicle is approaching the vehicle from the backside or lateral side while the vehicle is stopped.

In Example 123, the subject matter of any one of Examples 119 to 122 can optionally include that the instructions, when executed by the processor of the vehicle, cause the processor to: determine whether the further vehicle is approaching the vehicle from the backside or lateral side while the vehicle is moving with reduced velocity.

Example 124 is a method including: determining whether a further vehicle is approaching the vehicle from a backside or a lateral side; determining that a collision of the further vehicle with the vehicle is likely; determining an evasive maneuver of the vehicle such that the evasive maneuver reduces the collision likelihood or impact between the vehicle and the further vehicle; providing control instructions to control the vehicle to perform the evasive maneuver.

In Example 125, the subject matter of Example 124 can optionally include that the method further includes determining whether the vehicle has to stop or reduce its velocity.

In Example 126, the subject matter of Example 124 or 125 can optionally include that the method further includes using at least one sensor of the vehicle operating in the backside or lateral side of the vehicle to determine whether a further vehicle is approaching the vehicle from the backside or lateral side.

In Example 127, the subject matter of any one of Examples 124 to 126 can optionally include that the method further includes determing whether a collision is likely based on velocity or other physical characteristics of the further vehicle.

Example 128, the subject matter of any one of Examples 124 to 127 can optionally include that the method further includes determining that a collision of the further vehicle with the vehicle is likely after the vehicle has stopped or reduced its velocity.

In Example 129, the subject matter of any one of Examples 124 to 128 can optionally include that determining whether the further vehicle is approaching the vehicle from the backside or lateral side includes determining whether the further vehicle is approaching the vehicle from the backside or lateral side in a predetermined time after determining that the vehicle has to stop or reduce its velocity.

In Example 130, the subject matter of any one of Examples 124 to 129 can optionally include that determining whether the further vehicle is approaching the vehicle from the backside or lateral side includes determining whether the further vehicle is approaching the vehicle from the backside or lateral side while the vehicle is reducing its velocity to stop.

In Example 131, the subject matter of any one of Examples 124 to 130 can optionally include that determining whether the further vehicle is approaching the vehicle from the backside or lateral side includes determining whether the further vehicle is approaching the vehicle from the backside or lateral side while the vehicle is stopped.

In Example 132, the subject matter of any one of Examples 124 to 131 can optionally include that determining whether the further vehicle is approaching the vehicle from the backside or lateral side includes determining whether the further vehicle is approaching the vehicle from the backside or lateral side while the vehicle is moving with reduced velocity.

In Example 133, the subject matter of any one of Examples 124 to 132 can optionally include that determining an evasive maneuver of the vehicle includes: determining a plurality of potential evasive maneuvers; determining a respective risk value for each of the plurality of potential evasive maneuvers, the risk value representing a risk associated with the respective potential evasive maneuver; and determining the potential evasive maneuver of the plurality of potential evasive maneuvers having the lowest risk value as the evasive maneuver of the vehicle.

In Example 134, the subject matter of any one of Examples 124 to 133 can optionally include that the method further includes determining a collision risk value representing the collision likelihood and/or impact between the vehicle and the further vehicle and determining a maneuver risk value, the maneuver risk value representing a risk associated with the evasive maneuver; and that providing control instructions to control the vehicle to perform the evasive maneuver includes providing the control instructions to control the vehicle to perform the evasive maneuver in the case that the determined collision risk value is greater than a predefined collision risk threshold value and greater than the determined maneuver risk value.

In Example 135, the subject matter of Example 134 can optionally include that the method further includes: in the case that the determined collision risk value is not greater than the predefined collision risk threshold value and/or not greater than the determined maneuver risk value, providing control instructions to control the vehicle to activate an aural, a visual, or an audio-visual warning signal indicating the collision risk to other traffic participants.

In Example 136, the subject matter of Example 135 can optionally include that the warning signal includes at least one of: a horn, an indicator, a flash light, a rear light, a front light, a hazard light.

In Example 137, the subject matter of Example 134 can optionally include that the predefined collision risk threshold value is a first predefined collision risk threshold value and that the method further includes: in the case that the determined collision risk value is greater than a second predefined collision risk threshold value, providing control instructions to control the vehicle to activate an aural, a visual, or an audio-visual warning signal indicating the collision risk to other traffic participants. The the second predefined collision risk threshold value may be less than the first predefined collision risk threshold value.

In Example 138, the subject matter of Example 137 can optionally include that the warning signal includes at least one of: a horn, an indicator, a flash light, a rear light, a front light, a hazard light.

In Example 139, the subject matter of any one of Examples 124 to 138 can optionally include that the method further includes determining a collision risk value representing the collision likelihood and/or imapct between the vehicle and the further vehicle and determining a maneuver risk value, the maneuver risk value representing a risk associated with the evasive maneuver; and that providing control instructions to control the vehicle to perform the evasive maneuver includes providing the control instructions to control the vehicle to perform the evasive maneuver in the case that the determined maneuver risk value is less than a predefined maneuver risk threshold value and that the determined collision risk value is greater than a predefined collision risk threshold value and greater than the determined maneuver risk value.

In Example 140, the subject matter of Example 139 can optionally include that the method further includes: in the case that the determined collision risk value is not greater than the predefined collision risk threshold value and/or not greater than the determined maneuver risk value, providing control instructions to control the vehicle to activate an aural, a visual, or an audio-visual warning signal indicating the collision risk to other traffic participants.

In Example 141, the subject matter of Example 140 can optionally include that the warning signal includes at least one of: a horn, an indicator, a flash light, a rear light, a front light, a hazard light.

In Example 142, the subject matter of Example 140 or 141 can optionally include that the predefined collision risk threshold value is a first predefined collision risk threshold value and that the method further includes: in the case that the determined collision risk value is greater than a second predefined collision risk threshold value, providing control instructions to control the vehicle to activate an aural, a visual, or an audio-visual warning signal indicating the collision risk to other traffic participants. The second predefined collision risk threshold value may be less than the first predefined collision risk threshold value.

In Example 143, the subject matter of Example 142 can optionally include that the warning signal includes at least one of: a horn, an indicator, a flash light, a rear light, a front light, a hazard light.

Example 144 is a safety system including: means for determining whether a further vehicle is approaching the vehicle from a backside or a lateral side; means for determining that a collision of the further vehicle with the vehicle is likely; means for determining an evasive maneuver of the vehicle such that the evasive maneuver reduces the collision likelihood or impact between the vehicle and the further vehicle; and means for providing control instructions to control the vehicle to perform the evasive maneuver.

In Example 145, the subject matter of Example 144 can optionally include that the safety system further includes means for determining whether the vehicle has to stop or reduce its velocity.

In Example 146, the subject matter of Example 144 or 145 can optionally include that the safety system further includes means for using at least one sensor of the vehicle operating in the backside or lateral side of the vehicle to determine whether a further vehicle is approaching the vehicle from the backside or lateral side.

In Example 147, the subject matter of any one of Examples 144 to 146 can optionally include that the safety system further includes means for determing whether a collision is likely based on velocity or other physical characteristics of the further vehicle.

Example 148, the subject matter of any one of Examples 144 to 147 can optionally include that the safety system further includes means for determining that a collision of the further vehicle with the vehicle is likely after the vehicle has stopped or reduced its velocity.

In Example 149, the subj ect matter of any one of Examples 144 to 148 can optionally include that the means for determining whether a further vehicle is approaching the vehicle from a backside or a lateral side are configured to determine whether a further vehicle is approaching the vehicle from a backside or a lateral side in a predetermined time after it has been determined that the vehicle has to stop or reduce its velocity.

In Example 150, the subj ect matter of any one of Examples 144 to 149 can optionally include that the means for determining whether a further vehicle is approaching the vehicle from a backside or a lateral side are configured to determine whether a further vehicle is approaching the vehicle from a backside or a lateral side while the vehicle is reducing its velocity to stop.

In Example 151, the subject matter of any one of Examples 144 to 150 can optionally include that the means for determining whether a further vehicle is approaching the vehicle from a backside or a lateral side are configured to determine whether a further vehicle is approaching the vehicle from a backside or a lateral side while the vehicle is stopped.

In Example 152, the subject matter of any one of Examples 144 to 151 can optionally include that the means for determining whether a further vehicle is approaching the vehicle from a backside or a lateral side are configured to determine whether a further vehicle is approaching the vehicle from a backside or a lateral side while the vehicle is moving with reduced velocity.

Example 153 is a vehicle including the safety system according to any one of Examples 144 to 152 and means for controlling the vehicle in accordance with control instructions provided by the safety system.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1.   A safety system for a vehicle, the safety system comprising:
a processor configured to:

determine whether a further vehicle is approaching the vehicle from a backside or a lateral side;
determine that a collision of the further vehicle with the vehicle is likely;
determine an evasive maneuver of the vehicle such that the evasive maneuver reduces the collision likelihood or impact between the vehicle and the further vehicle; and
provide control instructions to control the vehicle to perform the evasive maneuver.

2.   The safety system according to claim 1,
wherein the processor is configured to:

determine whether the vehicle has to stop or reduce its velocity; and/or
use at least one sensor of the vehicle operating in the backside or lateral side of the vehicle to determine whether a further vehicle is approaching the vehicle from the backside or lateral side; and/or
determine whether a collision is likely based on velocity or other physical characteristics of the further vehicle; and/or
provide control instructions to control the vehicle to prepare for a collision between the vehicle and the further vehicle using at least one of: aural and/or visual information to warn a driver of the vehicle, an airbag, a position of a seat in the vehicle, a seat belt pretensioner.

3.  The safety system according to claim 1 or 2,
    wherein the processor is configured to:
    determine that a collision of the further vehicle with the vehicle is likely after the vehicle has stopped or reduced its velocity.

4.  The safety system according to any one of claims 1 to 3,
    wherein the processor is configured to:

    determine whether the further vehicle is approaching the vehicle from the backside or lateral side while the vehicle is stopped; and/or
    determine whether the further vehicle is approaching the vehicle from the backside or lateral side while the vehicle is reducing its velocity to stop; and/or
    determine whether the further vehicle is approaching the vehicle from the backside or lateral side while the vehicle is moving with reduced velocity.

5.  The safety system according to any one of claims 1 to 4,

    wherein the processor is configured to:

    determine a stopping situation in a driving direction of the vehicle; and
    determine that the vehicle has to stop or reduce its velocity approaching the stopping situation;
    determine a stopping distance of the vehicle such that a minimum distance between the stopped or slowed down vehicle and the stopping situation is equal to or greater than a predefined distance threshold value; and
    provide control instructions to control the vehicle to inform a driver of the vehicle to stop or slow down in accordance with the determined stopping distance or provide control instructions to control the vehicle to stop or reduce its velocity in accordance with the determined stopping distance;

    wherein preferably the processor is further configured to:

    determine whether the vehicle can stop within the stopping distance using a maximum braking intensity; and
    provide control instructions to control the vehicle to stop using the maximum braking intensity in the case that the vehicle cannot stop within the stopping distance using the maximum braking intensity.

6.  The safety system according to any one of claims 1 to 5,

    wherein the control instructions to control the vehicle to perform the evasive maneuver comprise control instructions to control the vehicle to accelerate and/or steer and perform the evasive maneuver; and/or
    wherein the collision likelihood or impact represents an accident severity considering at least one of: a type of the vehicle, a weight of the vehicle, a number and/or seat positions of passengers in the vehicle, an expected injury of each passenger in the vehicle, a direction from which the further vehicle approaches the vehicle.

7.  The safety system according to any one of claims 1 to 6,
    wherein the processor is configured to:

    determine a space for potential evasive maneuvers of the vehicle; and
    determine road information indicating whether the vehicle is driving on a highway, a motorway, a road with multiple lanes in driving direction of the vehicle, a road with a hard shoulder, and/or a road with a road verge; and
    determine the evasive maneuver of the vehicle using the space for potential evasive maneuvers and the road information.

8. The safety system according to any one of claims 1 to 7,
wherein the processor is configured to:

   determine a maneuver risk value, the maneuver risk value representing a risk associated with the evasive maneuver;
   provide the control instructions to control the vehicle to perform the evasive maneuver in the case that the determined maneuver risk value is less than a predefined maneuver risk threshold value.

9. The safety system according to any one of claims 1 to 8,

   wherein the vehicle is an autonomous vehicle;
   wherein the processor is configured to:

   determine whether there are passengers in the autonomous vehicle;
   determine whether there are passengers in the further vehicle;
   in the case that there are passengers in the further vehicle, determine a protective maneuver such that the protective maneuver reduces an expected injury of each of the passengers in the further vehicle;
   in the case that there are no passengers in the autonomous vehicle and that there are passengers in the further vehicle, provide control instructions to control the autonomous vehicle to perform the protective maneuver; and/or

   wherein the processor is configured to:

   determine whether there are passengers in the autonomous vehicle;
   determine whether there are passengers in a yet further vehicle in front of the vehicle with respect to a driving direction of the further vehicle;
   determine a protective maneuver such that the protective maneuver reduces an expected injury of each of the passengers in the yet further vehicle;
   in the case that there are no passengers in the autonomous vehicle and that there are passengers in the yet further vehicle, provide control instructions to control the autonomous vehicle to perform the protective maneuver.

10. The safety system according to any one of claims 1 to 9,
wherein the processor is configured to:

   determine a plurality of potential evasive maneuvers;
   determine a respective risk value for each of the plurality of potential evasive maneuvers, the risk value representing a risk associated with the respective potential evasive maneuver; and
   determine the potential evasive maneuver of the plurality of potential evasive maneuvers having the lowest risk value as the evasive maneuver of the vehicle.

11. The safety system according to any one of claims 1 to 10,
wherein the processor is configured to:

   determine a collision risk value representing the collision likelihood or impact between the vehicle and the further vehicle;
   determine a maneuver risk value, the maneuver risk value representing a risk associated with the evasive maneuver;
   provide the control instructions to control the vehicle to perform the evasive maneuver in the case that the determined collision risk value is greater than a first predefined collision risk threshold value and greater than the determined maneuver risk value; and
   in the case that the determined collision risk value is greater than a second predefined collision risk threshold value, provide control instructions to control the vehicle to activate an aural, a visual, or an audio-visual warning signal indicating the collision risk to other traffic participants, wherein the second predefined collision risk threshold value is less than the first predefined collision risk threshold value.

12. The safety system according to any one of claims 1 to 11,

wherein the processor is configured to:

determine a collision risk value representing the collision likelihood or impact between the vehicle and the further vehicle;

determine a maneuver risk value, the maneuver risk value representing a risk associated with the evasive maneuver;

provide the control instructions to control the vehicle to perform the evasive maneuver in the case that the determined maneuver risk value is less than a predefined maneuver risk threshold value and that the determined collision risk value is greater than a first predefined collision risk threshold value and greater than the determined maneuver risk value; and

in the case that the determined collision risk value is greater than a second predefined collision risk threshold value, provide control instructions to control the vehicle to activate an aural, a visual, or an audio-visual warning signal indicating the collision risk to other traffic participants, wherein the second predefined collision risk threshold value is less than the first predefined collision risk threshold value;

wherein preferably the risk associated with the evasive maneuver represents a risk of performing the evasive maneuver and considers at least one of: a collision risk between the vehicle and other traffic participants in a surrounding of the vehicle, a number and/or seat positions of passengers in the vehicle, an expected injury of each passenger in the vehicle, an available space for performing the evasive maneuver.

13. A vehicle, comprising a safety system according to any one of claims 1 to 12, wherein the vehicle optionally further comprises:

a sensor for perceiving a surrounding of the vehicle, the sensor configured to provide sensor data representing the surrounding of the vehicle, wherein the processor of the safety system is configured to use the provided sensor to determine: whether the further vehicle is approaching the vehicle from the backside or lateral side, and the evasive maneuver.

14. A method, comprising:

determining whether a further vehicle is approaching the vehicle from a backside or a lateral side;

determining that a collision of the further vehicle with the vehicle is likely;

determining an evasive maneuver of the vehicle such that the evasive maneuver reduces the collision likelihood or impact between the vehicle and the further vehicle; and

providing control instructions to control the vehicle to perform the evasive maneuver.

15. A non-transitory computer-readable medium having instructions recorded thereon which, when executed by a processor of a vehicle, cause the processor to carry out the method of claim 14.

# FIG. 1

# FIG. 2

200

# FIG. 3

300

312

310

314
Transceiver

316

330
memory

318
PHY

320
Control

322

# FIG. 4A

400

102

406 — vehicle stopped, reducing its velocity, or moving with reduced velocity?

No

Yes

408 — further vehicle approaching?

No

Yes

410 — evasive maneuver

412 — control instructions for evasive maneuver

# FIG. 4B

400

102

402 — stopping situation?

No

Yes

404 — control instructions to slow down the vehicle

406 — vehicle stopped, reducing its velocity, or moving with reduced velocity?

No

Yes

408 — further vehicle approaching?

No

Yes

410 — evasive maneuver

412 — control instructions for evasive maneuver

# FIG. 4C

400

102

402 — stopping situation?   No

Yes

404 — control instructions to slow down the vehicle

406 — vehicle stopped, reducing its velocity, or moving with reduced velocity?   No

Yes

408 — further vehicle approaching?   No

414

control instructions to activate warning signals

Yes

410 — evasive maneuver

416

control instructions to transmit collision information to further vehicle

412 — control instructions for evasive maneuver

418

control instructions to prepare for a collision

# FIG. 4D

400

102

408 — further vehicle approaching? — No

Yes

460 — collision with further vehicle likely? — No

Yes

410 — evasive maneuver

412 — control instructions for evasive maneuver

# FIG. 5A

# FIG. 5B

# FIG. 5C

# FIG. 5D

# FIG. 5E

# FIG. 5F

## FIG. 6A

# FIG. 6B

400

102

446

448

```
collision risk
Rc
```

```
maneuver risk
Rm
```

450

454

No

$R_c > R_{t,c2}$ ?

Yes

452

$R_c > R_{t,c1}$ and
$R_c > R_m$ ?

No

Yes

412

```
control instructions for
evasive maneuver
```

414

```
control instructions to
activate warning signals
```

# FIG. 6C

# FIG. 7A

700A

100

702

704

v<$v_t$

730

# FIG. 7B

700B

100

$d_{stopping}$    $d_m$    704

# FIG. 7C

700C

v≠0

706

100

d<sub>m</sub>

704

730

# FIG. 7D

700D

708

714

v≠0

v≠0

706

710

100

712

704

# FIG. 8

800

802

Determining whether a vehicle has to stop or reduce its velocity

804

After it has been determined that the vehicle has to stop or reduce ist velocity, determining whether a further vehicle is approaching the vehicle form a backside or a lateral side

806

Determining an evasive maneuver of the vehicle such that the evasive maneuver reduces a collision risk between the vehicle and the further vehicle

808

Providing control instructions to control the vehicle to perform the evasive maneuver

Europäisches
Patentamt

European
Patent Office

Office européen
des brevets

# EUROPEAN SEARCH REPORT

**Application Number**

**EP 21 19 5705**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2009 025607 A1 (DAIMLER AG [DE]) 11 February 2010 (2010-02-11) | 1-8,10, 13-15 | INV. B60W30/085 |
| Y | * paragraphs [0001] - [0026]; figure 2 * | 9 | B60W30/095 |
| A | | 11,12 | B60W30/18 |
| | ----- | | B60W60/00 |
| X | WO 2017/003704 A1 (DELPHI TECH INC [US]) 5 January 2017 (2017-01-05) | 1-8,10, 13-15 | B60W30/09 B60W50/14 |
| Y | * paragraphs [0024] - [0038]; figure 2 * | 9 | |
| | ----- | | |
| Y | US 2015/242552 A1 (KOZLOSKI JAMES R [US] ET AL) 27 August 2015 (2015-08-27) * paragraphs [0020] - [0052]; figure 2 * | 9 | |
| | ----- | | |
| A | US 2020/262423 A1 (OBORIL FABIAN [DE] ET AL) 20 August 2020 (2020-08-20) * the whole document * | 1-15 | |
| | ----- | | |

**TECHNICAL FIELDS SEARCHED (IPC)**

**B60W**

The present search report has been drawn up for all claims

| Place of search | Date of completion of the search | Examiner |
|---|---|---|
| Munich | 25 February 2022 | Stolle, Martin |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

...................................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 21 19 5705

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2022

| Patent document cited in search report | Publication date | Patent family member(s) | | Publication date |
|---|---|---|---|---|
| DE 102009025607 A1 | 11-02-2010 | NONE | | |
| WO 2017003704 A1 | 05-01-2017 | CN | 107735299 A | 23-02-2018 |
| | | EP | 3317155 A1 | 09-05-2018 |
| | | US | 2017001636 A1 | 05-01-2017 |
| | | WO | 2017003704 A1 | 05-01-2017 |
| US 2015242552 A1 | 27-08-2015 | GB | 2538207 A | 09-11-2016 |
| | | JP | 6708837 B2 | 10-06-2020 |
| | | JP | 2017507065 A | 16-03-2017 |
| | | US | 9108582 B1 | 18-08-2015 |
| | | US | 2015242552 A1 | 27-08-2015 |
| | | WO | 2015128767 A1 | 03-09-2015 |
| US 2020262423 A1 | 20-08-2020 | CN | 113696906 A | 26-11-2021 |
| | | EP | 3907722 A1 | 10-11-2021 |
| | | US | 2020262423 A1 | 20-08-2020 |

EPO FORM P0459

For more details about this annex : see Official Journal of the European Patent Office, No. 12/82